# EUROPÄISCHE PATENTSCHRIFT

(11) **EP 3 590 014 B1**
(45) Veröffentlichungstag und Bekanntmachung des Hinweises auf die Patenterteilung: **17.11.2021**
(21) Anmeldenummer: 18707911.6
(22) Anmeldetag: 27.02.2018
(51) Int. Cl.: G05D 1/00, G05D 1/02

(54) **VERFAHREN ZUR STEUERUNG EINES AUTONOMEN, MOBILEN ROBOTERS**
METHOD FOR CONTROLLING AN AUTONOMOUS, MOBILE ROBOT
PROCÉDÉ DE COMMANDE D'UN ROBOT MOBILE AUTONOME

(30) Priorität: 02.03.2017 DE 102017104427; 02.03.2017 DE 102017104428
(43) Veröffentlichungstag der Anmeldung: 08.01.2020
(73) Patentinhaber: Robart GmbH, 4020 Linz (AT)
(72) Erfinder: ARTES, Harold, 4020 Linz (AT); CONTI, David, 4020 Linz (AT); FREUDENTHALER, Christoph, 4020 Linz (AT); SEETHALER, Dominik, 4020 Linz (AT); VOGEL, Reinhard, 4020 Linz (AT)
(74) Vertreter: Westphal, Mussgnug & Partner, Patentanwälte mbB
(86) Internationale Anmeldenummer: PCT/EP2018/054807
(87) Internationale Veröffentlichungsnummer: WO 2018/158248

(56) Entgegenhaltungen:
- EP-A1- 3 079 030
- DE-A1-102015 006 014
- US-A1- 2014 316 636

## Beschreibung

### TECHNISCHES GEBIET

Die Beschreibung betrifft das Gebiet der autonomen, mobilen Roboter, insbesondere den sicheren Betrieb eines autonomen mobilen Serviceroboters.

### HINTERGRUND

In den letzten Jahren finden autonome mobile Roboter, insbesondere Serviceroboter, zunehmend Verbreitung in privaten Haushalten. Mögliche Anwendungen sind beispielsweise Reinigungsrobotern zum Saugen und/oder Wischen einer Bodenfläche oder Überwachungsroboter, um auf Patrouillenfahrten mögliche Gefahren wie Einbrecher oder Feuer zu detektieren.

Eine wesentliche Nutzeranforderung besteht z.B. darin, dass der Roboter alle wichtigen Bereiche seines Einsatzgebietes *(deployment area)* erreicht, um seine Aufgabe erfüllen zu können. Abhängig von der jeweiligen Anwendung kann es vorteilhaft sein, einzelne Bereiche für den Roboter zu sperren. Beispielsweise kann es wünschenswert sein, dass der Roboter einen Bereich wie z.B. eine Spielecke für Kinder meidet, weil viele kleine Gegenstände die Bewegung des Roboters behindern oder durch den Roboter beschädigt werden könnten.

Bekannte Lösungen ermöglichen es dem Nutzer, eine Markierung im Einsatzgebiet des Roboters zu platzieren, die der Roboter mit einem Sensor detektieren kann; eine Markierung zeigt dem Roboter einen Sperrbereich an. Ein Beispiel dafür ist eine Art "Leuchtturm" (Lighthouse), der ein Infrarotsignal aussendet. Diese Lösung ist jedoch von einer eigenen Energieversorgung (z.B. Batterie) abhängig, wodurch die Zuverlässigkeit eingeschränkt sein kann. Zudem muss das Infrarotsignal genau ausgerichtet werden und hat eine begrenzte Reichweite. Ein weiteres Beispiel sind für den Roboter detektierbare Magnetbänder, die auf dem Boden aufgelegt oder aufgeklebt werden; wenn der Roboter ein Magnetband erkennt, wird er dieses nicht überfahren. Alle diese Hilfsmittel haben den Nachteil, dass sie die Gestaltungsfreiheit des Wohnraums für den Nutzer einschränken und sehr unflexibel sind.

Bei autonomen mobilen Robotern, die eine Karte ihres Einsatzgebiets speichern und verwalten, um sie in nachfolgenden Einsätzen zu nutzen, kann ein virtueller Sperrbereich direkt in der Karte verzeichnet werden. Dies können beispielsweise virtuelle Begrenzungen sein, die der Roboter nicht überfahren darf. Der Vorteil dieses rein virtuellen Sperrbereichs ist, dass er keine zusätzlichen Markierungen in der Umgebung des Roboters benötigt. Jedoch können Fehler des Benutzers oder Mess- und Fahrfehler des Roboters dazu führen, dass der Roboter sich in einem Bereich befindet, den der Benutzer für den Roboter eigentlich sperren wollte, wodurch unbeabsichtigt Schäden verursacht werden können. Zudem ist eine möglichst einfache aber auch nachvollziehbare Möglichkeit der Eingabe eines virtuellen Sperrbereichs notwendig. Die Publikation US 2014/316636 A1 offenbart ein Verfahren zur Bestimmung einer virtuellen Wand auf einer Karte, um zu vermeiden, dass ein Reinigungsroboter ein besonderes Gebiet befährt. Die Dokumente EP 3 079 030 A1 und DE 10 2015 006014 A1 offenbaren ebenfalls Verfahren zur Navigation eines Roboters, bei denen virtuelle Hindernisse vermieden werden.

Die der Erfindung zugrunde liegende Aufgabe besteht darin, die Bedienung eines autonomen, mobilen Roboters und insbesondere den Umgang mit Sperrbereichen einfach und robust zu gestalten.

### ZUSAMMENFASSUNG

Die oben genannte Aufgabe wird durch das Verfahren gemäß Anspruch 1 und den autonomen, mobilen Roboter gemäß Anspruch 5 gelöst. Verschiedene Ausführungsbeispiele und Weiterentwicklungen sind Gegenstand der abhängigen Ansprüche.

Es wird ein Verfahren zur Steuerung eines autonomen mobilen Roboters beschrieben, der dazu ausgebildet ist, unter Verwendung von Sensoren und einer Karte eigenständig in einem Robotereinsatzgebiet zu navigieren. Gemäß einem Ausführungsbeispiel umfasst das Verfahren das Detektieren von Hindernissen und das Ermitteln der Position von detektierten Hindernissen basierend auf von den Sensoren erhaltenen Messdaten, das Steuern des Roboters, so dass eine Kollision mit einem detektierten Hindernis vermieden wird, wobei die Karte Kartendaten umfasst, die mindestens einen virtuellen Sperrbereich repräsentieren, der bei dem Steuern des Roboters in gleicher Weise berücksichtigt wird, wie ein real detektiertes Hindernis. Das Verfahren umfasst weiter Speichern der ermittelten Position von detektierten Hindernissen in der Karte, das Bestimmen der Position des Roboters durch den Roboter, sowie das Anwenden eines Pfadplanungsalgorithmus, der unter Umgehung eines in den Karte gespeicherten Hindernisses einen Pfad zu einem Zielpunkt plant, wobei der virtuelle Sperrbereich wie ein in der Karte gespeichertes Hindernis behandelt wird.

.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1A zeigt eine System mit einem autonomen mobilen Roboter, einer Mensch-Maschine-Schnittstelle und einem Server, die über eine Netzwerkverbindung kommunizieren können.
Figur 1B zeigt in einem Blockdiagramm den Aufbau eines autonomen mobilen Roboters und dessen Kommunikationsmöglichkeiten mit anderen (externen) Geräten.
Figur 2 zeigt schematisch mehrere Möglichkeiten, mittels einer auf einer Mensch-Maschine-Schnittstelle dargestellten Karte, positionsbezogene Informationen zur Definition von virtuellen Sperrbereichen einzugeben.
Figur 3 zeigt einen virtuellen Sperrbereich um ein Hindernis, dessen maximale Abmessung für den Roboter nicht ohne weiteres detektierbar sind.
Figur 4 illustriert ein Beispiel der Darstellung positionsbezogener Information, wie z.B. einen virtuellen Sperrbereich, durch Projektion auf die Bodenfläche.
Figur 5 illustriert eine exemplarische Anwendung von virtuellen Begrenzungslinien zur Absicherung von Gefahrenstellen wie z.B. Treppen oder von Hindernissen.
Figur 6 illustriert ein Beispiel der Interaktion zweier Roboter, wobei positionsbezogene Informationen, beispielsweise über virtuelle Sperrbereiche ausgetauscht werden. finition des virtuellen Sperrbereichs, das Auswerten der Nutzereingabe, wobei geprüft wird, ob die Nutzereingabe mindestens ein vordefiniertes Kriterium erfüllt, und das Entscheiden - basierend auf der Auswertung der Nutzereingabe - ob und/oder in welcher geometrischen Form der virtuelle Sperrbereich in der Karte gespeichert wird.

Des Weiteren wird ein Verfahren zur Steuerung eines autonomen mobilen Roboters beschrieben, wobei der Roboter dazu ausgebildet ist, unter Verwendung von Sensoren und einer elektronischen Karte eigenständig in einem Robotereinsatzgebiet zu navigieren, und regelmäßig seine Position in der Karte zu ermitteln, wobei die Karte mindestens einen virtuellen Sperrbereich enthalten kann, welche der Roboter bei der Navigation nicht befährt. Gemäß einem Ausführungsbeispiel umfasst das Verfahren das Erkennen von Risikobereichen beim Navigieren durch das Robotereinsatz-gebiet, in denen die Funktion des Roboters gefährdet oder eingeschränkt ist, und das automatische Definieren eines Sperrbereichs, der einen erkannten Risikobereich einschließt und sowie das Abspeichern des Sperrbereichs in der Karte. Weitere Ausführungsbeispiele betreffen Roboter, die dazu eingerichtet sind, die hier beschriebenen Verfahren durchzuführen.

Ein weiteres Ausführungsbeispiel betrifft ein System, das einen autonomen mobilen Roboter und einen Projektor umfasst. Der Roboter ist dazu eingerichtet, anhand von Kartendaten selbsttätig in einem Robotereinsatzgebiet zu navigieren, und der Projektor ist dazu eingerichtet, Informationen auf eine Bodenfläche oder einen Gegenstand in dem Robotereinsatzgebiet zu projizieren. Das System ist dazu ausgebildet, aus der Karte positionsbezogene Informationen mit zugehöriger Position zu extrahieren, und diese positionsbezogenen Informationen mittels des Projektors an der zugehörigen Position auf die Bodenfläche oder auf einen dort befindlichen Gegenstand zu projizieren.

Schließlich wird ein autonomer mobiler Roboter beschrieben. Gemäß einem Ausführungsbeispiel ist der Roboter dazu eingerichtet, anhand von Kartendaten selbsttätig in einem Robotereinsatzgebiet zu navigieren, über eine Mensch-Maschine-Schnittstelle eine positionsbezogene Information von einem Nutzer entgegenzunehmen, und basierend darauf einen Roboterpfad zu ermitteln und entlang diesem zu fahren. Während oder nachdem der Roboter den Roboterpfad abgefahren hat, wird die positionsbezogene Information vom Nutzer entweder verworfen oder bestätigt und dauerhaft mit den Kartendaten abgespeichert.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:

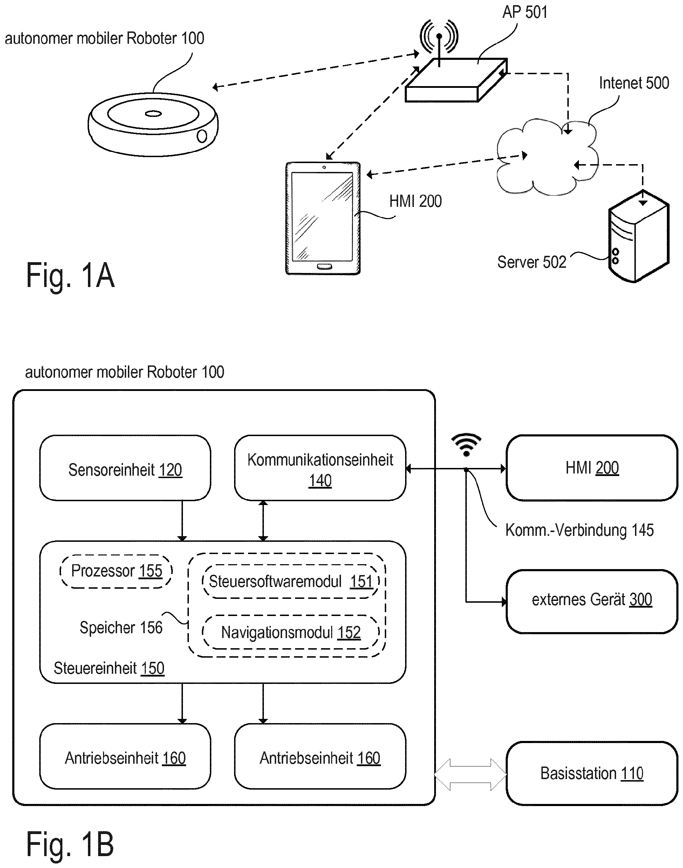

Figur 1A zeigt eine System mit einem autonomen mobilen Roboter, einer Mensch-Maschine-Schnittstelle und einem Server, die über eine Netzwerkverbindung kommunizieren können.
Figur 1B zeigt in einem Blockdiagramm den Aufbau eines autonomen mobilen Roboters und dessen Kommunikationsmöglichkeiten mit anderen (externen) Geräten.

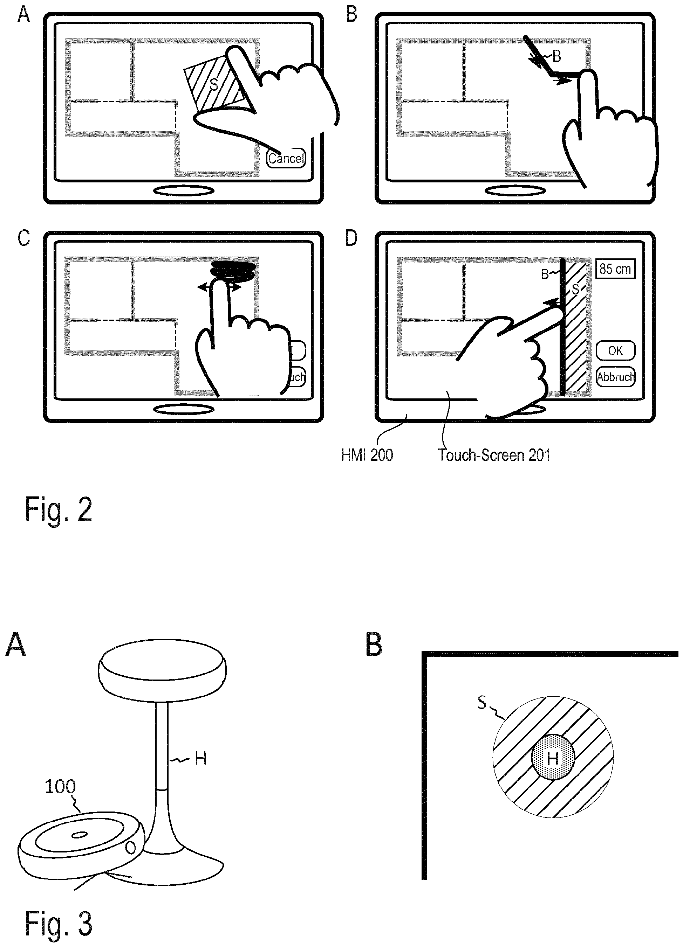

Figur 2 zeigt schematisch mehrere Möglichkeiten, mittels einer auf einer Mensch-Maschine-Schnittstelle dargestellten Karte, positionsbezogene Informationen zur Definition von virtuellen Sperrbereichen einzugeben.
Figur 3 zeigt einen virtuellen Sperrbereich um ein Hindernis, dessen maximale Abmessung für den Roboter nicht ohne weiteres detektierbar sind.

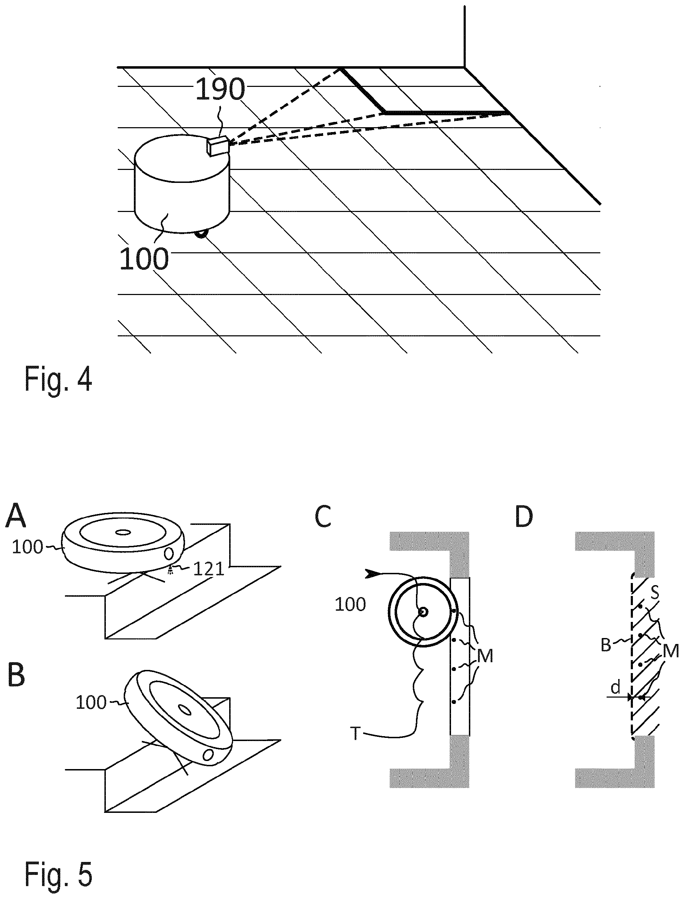

Figur 4 illustriert ein Beispiel der Darstellung positionsbezogener Information, wie z.B. einen virtuellen Sperrbereich, durch Projektion auf die Bodenfläche.
Figur 5 illustriert eine exemplarische Anwendung von virtuellen Begrenzungslinien zur Absicherung von Gefahrenstellen wie z.B. Treppen oder von Hindernissen.

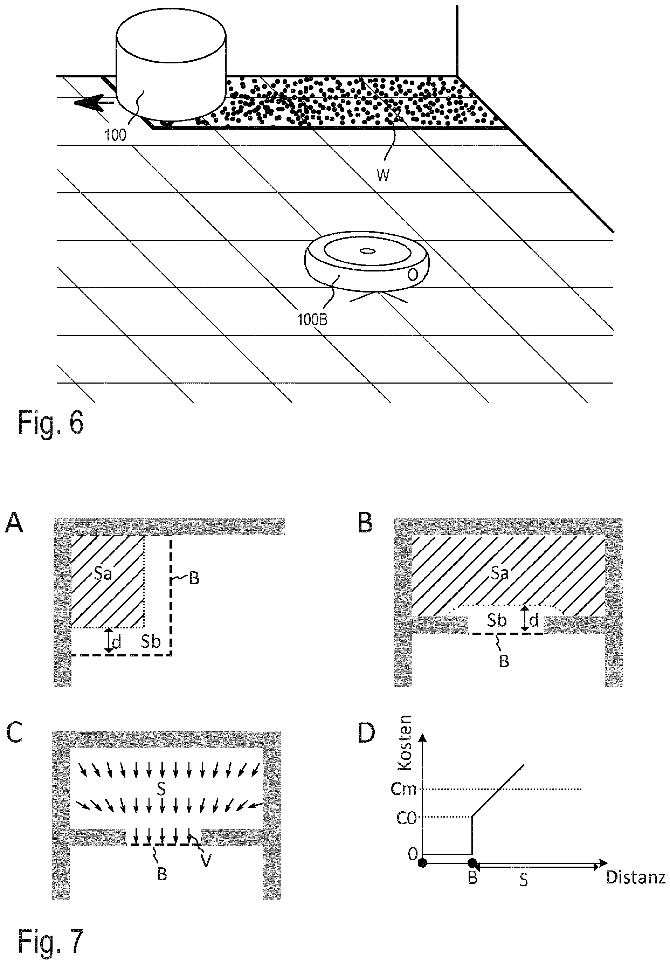

Figur 6 illustriert ein Beispiel der Interaktion zweier Roboter, wobei positionsbezogene Informationen, beispielsweise über virtuelle Sperrbereiche ausgetauscht werden.
Figur 7 dient zur Visualisierung unterschiedlicher Ansätze mit einem mobilen autonomen Roboter aus virtuellen Sperrgebieten heraus zu navigieren.

### DETAILLIERTE BESCHREIBUNG

Ein autonomer mobiler Roboter führt als Serviceroboter selbsttätig eine oder mehrere Aufgaben *(tasks)* aus wie beispielsweise die Reinigung oder Überwachung des Robotereinsatzgebietes *(robot deployment area)* oder den Transport von Gegenständen innerhalb des Robotereinsatzgebietes (z.B. ein Apartment). Die hier beschriebenen Ausführungsbeispiele betreffen einen Reinigungsroboter. Sie sind jedoch nicht auf Reinigungsroboter beschränkt, sondern anwendbar auf alle Anwendungen, in denen ein autonomer mobiler Roboter eine Aufgabe in einem definierten Einsatzgebiet durchführen soll, in dem er sich selbsttätig mithilfe einer Karte bewegen (bzw. navigieren) kann.

Figur 1A zeigt exemplarisch die Einbindung eines autonomen, mobilen Roboters 100 in ein Heimnetzwerk, das z.B. ein Drahtlosnetzwerk (WLAN) sein kann. Im vorliegenden Beispiel ermöglicht ein WLAN-Access-Point 501 dem Roboter 100 die Kommunikation mit einer Mensch-Maschine-Schnittstelle *(human machine interface,* HMI) 200, sowie mit externen Rechner 502 (z.B. ein Cloud-Server), der über das Internet 500 erreichbar ist. Figur 1B zeigt beispielhaft an einem Blockdiagramm die verschiedenen Einheiten (Module) des autonomen mobilen Roboters 100 aus Fig. 1A. Dabei kann eine Einheit eine eigenständige Baugruppe oder ein Teil einer Software zur Steuerung des Roboters sein. Die für das Verhalten des Roboters 100 zuständige Software (umfassend ein Steuersoftwaremodul 151 und Navigationsmodul 152, siehe Fig. 1B) kann auf der Steuereinheit 150 des Roboters 100 (mittels entsprechendem Prozessor 155 und Speicher156) ausgeführt werden. Die Steuereinheit 150 kann manche Operationen zumindest teilweise auch mit Hilfe eines externen Rechners durchführen. Das heißt, die von der Steuereinheit 150 benötigte Rechenleistung kann zumindest teilweise auf einen externen Rechner ausgelagert sein, welcher beispielsweise über ein Heimnetzwerk oder über das Internet (Cloud) erreichbar ist.

Der Roboter arbeitet im Wesentlichen autonom. Um ein Arbeiten ohne eine größere Zahl von Interaktionen mit dem Nutzer zu ermöglichen, besitzt der Roboter beispielsweise eine Basisstation 110, zu welcher er automatisch nach Erledigung einer Aufgabe zurückkehrt. An dieser kann er beispielsweise seine Batterien aufladen und/oder (bei einem Reinigungsroboter) aufgenommenen Schmutz entsorgen.

Der autonome mobile Roboter 100 umfasst eine Antriebseinheit 170, welche beispielsweise Elektromotoren, Getriebe und Räder aufweisen kann, mit Hilfe denen der Roboter 100 - zumindest theoretisch - jeden Punkt seines Einsatzgebiets anfahren kann. Die Antriebseinheit 170 kann z.B. dazu ausgebildet sein, von der Steuereinheit empfangene Kommandos oder Signale in eine Bewegung des Roboters 100 umzusetzen.

Der autonome mobile Roboter 100 umfasst eine Kommunikationseinheit 140, um eine Kommunikationsverbindung 145 zu der Mensch-Maschine-Schnittstelle (HMI) 200 und/oder anderen externen Geräten 300 herzustellen. Die Kommunikationsverbindung kann beispielsweise eine direkte drahtlose Verbindung (z. B. Bluetooth), eine lokale drahtlose Netzwerkverbindung (z. B. WLAN oder ZigBee) oder eine Internetverbindung (z. B. zu einem Cloud-Service) sein. Die Mensch-Maschine-Schnittstelle 200 kann einem Nutzer Informationen über den autonomen mobilen Roboter 100 anzeigen (z.B. Batteriestatus, aktueller Arbeitsauftrag, Kartendaten (d.h. in einer Karte gespeicherte - und damit positionsbezogene - Information) wie eine Reinigungskarte, etc.) und Nutzerkommandos für einen Arbeitsauftrag des autonomen mobilen Roboters 100 entgegennehmen.

Beispiele für eine Mensch-Maschine-Schnittstelle 200 sind Tablet-PC, Smartphone, Smartwatch, Computer oder Smart-TV. Eine Mensch-Maschine-Schnittstelle 200 kann auch direkt in den Roboter integriert sein, wodurch der Roboter beispielsweise über Tasten, Gesten und/oder Sprachein- und -ausgabe bedient werden kann. Beispiele für externe Geräte 300 sind Computer und Server, auf denen Berechnungen und/oder Daten ausgelagert werden, externe Sensoren, die zusätzliche Informationen liefern, oder andere Haushaltsgeräte (z. B. andere autonome mobile Roboter 100B), mit denen der autonome mobile Roboter 100 zusammenarbeitet und/oder Informationen austauscht.

Der autonome mobile Roboter 100 kann eine Arbeitseinheit 160 besitzen, wie beispielsweise eine Reinigungseinheit zur Reinigung einer Bodenfläche (z. B. Bürste, Saugvorrichtung) oder ein Greifarm zum Fassen und Transportieren von Gegenständen. In einigen Fällen wie beispielsweise bei einem Telepräsenz-Roboter oder einem Überwachungsroboter wird eine andere Baueinheit zur Erfüllung der vorgesehenen Aufgaben genutzt und es ist keine Arbeitseinheit 160 notwendig. So besitzt ein Telepräsenz-Roboter ein mit einer Mensch-Maschine-Schnittstelle 200 gekoppelte Kommunikationseinheit 140 mit einer Multimediaeinheit bestehend aus beispielsweise Mikrofon, Kamera und Bildschirm, um die Kommunikation zwischen mehreren räumlich weit entfernten Personen zu ermöglichen. Ein Überwachungsroboter ermittelt auf Kontrollfahrten mit Hilfe seiner Sensoren ungewöhnliche Ereignisse (z. B. Feuer, Licht, unautorisierte Personen, etc.) und informiert beispielsweise den Nutzer oder eine Kontrollstelle hierüber.

Der autonome mobile Roboter 100 umfasst eine Sensoreinheit 120 mit verschiedenen Sensoren, beispielsweise einen oder mehrere Sensoren zur Erfassung von Informationen über die Umgebung *(environment)* des Roboters, wie z.B. die Position von Hindernissen im Robotereinsatzgebiet oder anderen Navigationsfeatures (z.B. Landmarken, *land marks).* Sensoren zur Erfassung von Informationen über die Umgebung sind beispielsweise aktive Sensoren zur Messung von Abständen zu Objekten (z.B. Wänden, Hindernissen, etc.) in der Umgebung des Roboters wie beispielsweise einen optischen und/oder akustischen Sensor, der mittels Triangulation oder Laufzeitmessung eines ausgesandten Signals Abstände messen kann (Triangulationssensor, 3D-Kamera, Laserscanner, Ultraschallsensoren). Andere typische Beispiele für geeignete Sensoren sind passive Sensoren wie Kameras, taktile bzw. berührungsempfindliche Sensoren zur Hinderniserkennung, Bodenabstandssensoren (z.B. zur Erkennung einer eine Absturzkante, einer Stufe einer Treppe, etc.) Sensoren zur Bestimmung der Geschwindigkeit und/oder des zurückgelegten Weges des Roboters wie z.B. Odometer, Inertialsensoren (Beschleunigungssensor, Drehratensensor) zur Bestimmung von Lage- und Bewegungsänderung des Roboters oder Radkontaktschalter, um einen Kontakt zwischen Rad und Boden zu detektieren.

Die erwähnte Steuereinheit 150 kann dazu ausgebildet sein, alle Funktionen bereitzustellen, die benötigt werden, damit der autonome mobile Roboter 100 sich selbstständig in seinem Einsatzgebiet bewegen und eine Aufgabe erfüllen kann. Hierzu umfasst die Steuereinheit 150 beispielsweise einen Prozessor 155 und ein Speicher 156, um eine Steuersoftware (siehe Fig. 1B, Steuersoftwaremodul 151) des Roboters 100 abzuarbeiten. Die Steuereinheit 150 erzeugt basierend auf den Informationen, welche die Sensoreinheit 120 und die Kommunikationseinheit 140 liefern, die Steuerkommandos oder Steuersignale für die Arbeitseinheit 160 und die Antriebseinheit 170. Die Antriebseinheiten können diese Steuersignale bzw. Steuerkommandos in eine Bewegung des Roboters umsetzen. Das Steuersoftwaremodul 151 kann Software-Funktionen zur Objekterkennung und Arbeitsplanung umfassen. Damit der Roboter autonom eine Aufgabe verrichten kann, ist als weiteres Softwaremodul ein Navigationsmodul 152 vorgesehen. Das Navigationsmodul 152 kann Software-Funktionen für die Navigation (z.B. Management der Karte, kartenbasierte Pfadplanung, Selbstlokalisierung des Roboters in der Karte, SLAM-Algorithmen etc.) des Roboters umfassen. Selbstverständlich können Steuersoftwaremodul 151 und Navigationsmodul interagieren, Informationen austauschen und zusammenarbeiten. Dies ermöglicht dem Roboter, sich in seiner Umgebung beispielsweise anhand von Navigationsfeatures wie beispielsweise Landmarken zu orientieren und zu navigieren. Das Navigationsmodul 152 arbeitet beispielsweise mit einer Hindernisvermeidungsstrategie (Hindernisvermeidungsalgorithmus), einem SLAM-Algorithmus *(Simultaneous Localization and Mapping,* simultane Lokalisierung und Kartenerstellung) und/oder mit einer oder mehr Karten des Robotereinsatzgebiets. Hierbei werden insbesondere Hindernisse mit Hilfe von Sensormessungen erfasst und ihre Position bestimmt. Die Position der Hindernisse kann in Form von Kartendaten gespeichert werden. Diese Verfahren sind an sich bekannt und werden daher hier nicht näher erläutert.

Die Karten des Robotereinsatzgebiets kann der Roboter während eines Einsatzes *(deployment)* neu erstellen oder eine zu Beginn des Einsatzes schon vorhandene Karte nutzen. Eine vorhandene Karte kann bei einem vorhergehenden Einsatz, beispielsweise einer Erkundungsfahrt, vom Roboter selber erstellt worden sein, oder von einem anderen Roboter und/oder Menschen zur Verfügung gestellt werden und wird beispielsweise in einem nicht-flüchtigen Speicher 156 dauerhaft (permanent) gespeichert. Alternativ können die permanent zu speichernden Karten des Robotereinsatzgebiets auch außerhalb des Roboters gespeichert werden, beispielsweise auf einem Computer im Haushalt des Nutzers des Roboters (z. B. Tablet-PC, Home-Server) oder auf einem über das Internet erreichbaren Computer (z. B. Cloud-Server). In dem Beispiel in Fig. 1 ist die Karte in dem Navigationsmodul 152 enthalten. Die von einem Roboter verwendete Karte ist üblicherweise eine elektronisch Karte, und eine elektronische Karte umfasst ein der der Regel eine Sammlung von Kartendaten, welche positionsbezogene Informationen repräsentieren. Eine Karte repräsentiert also eine Vielzahl von Datensätzen mit Kartendaten, und die Kartendaten können eine beliebige positionsbezogene Informationwie beispielsweise Linien oder andere geometrische Objekte (z.B. Flächenelemente) enthalten. Diese Linien können z.B. die (vom Roboter detektierte) Kontur eines Hindernisses repräsentieren. Zu den Kartendaten gehören jedoch nicht nur geometrische Objekte und deren Lage im Robotereinsatzgebiet, sondern auch Informationen betreffend die Bedeutung von in der Karte eingetragenen Objekten und deren Eigenschaften. Beispielsweise kann einem in der Karte eingetragenen Objekt ein oder mehrere Attribute (Eigenschaften) zugeordnet werden. So können bestimmten (Teil-) Bereichen einer Karte Attribute wie "ungereinigt" oder "gereinigt" und/oder "Teppich" oder "Parkett" und/oder "durch Hindernis blockiert" zugeordnet werden. Andere Attribute können z.B. einen (Teil-) Bereich als "Küche" klassifizieren oder diesem ein Zeitintervall zuordnen, in der der betreffende Bereich gereinigt werden soll.

Generell ist eine vom Roboter 100 verwendbare (elektronische) Karte eine Sammlung von Kartendaten zur Speicherung von ortsbezogenen Informationen über ein Einsatzgebiet des Roboters und die für den Roboter relevante Umgebung in diesem Einsatzgebiet. Eine Art von ortsbezogenen Informationen, die in einer Karte gespeichert werden können, sind Information über die Lage von Objekten im Robotereinsatzgebiet. Solche Objekte können Hindernisse sein wie z.B. Wände, Türen, Möbelstücke, andere bewegliche und unbewegliche Objekte, mit denen der Roboter (zumindest theoretisch) kollidieren könnte. Auch eine Roboterbasisstation 110 kann ein in der Karte verzeichnetes Objekt sein. Die Lage von Objekten (Hindernissen) wird meist mittels Koordinaten definiert. Eine weitere Art von Kartendaten sind ortsbezogene Informationen betreffend die Durchführung *(performance)* einer Aufgabe (*task*) des Roboters 100 wie beispielsweise, welche Flächenstücke bearbeitet also insbesondere gereinigt wurden, oder welche Positionen (innerhalb des Robotereinsatzgebietes) der Roboter während seiner Tätigkeit angefahren hat. Eine weitere Art von ortsbezogenen Informationen sind die Aufteilung des Robotereinsatzgebietes in mehrere Räume und/oder Teilbereiche. Diese Aufteilung kann automatisiert durch den Roboter 100 erfolgen oder auch mit Hilfe des Nutzers. Der Nutzer kann die Aufteilung manuell vornehmen oder eine automatisiert vorgenommene Aufteilung manuell überarbeiten. Auch die Benennung der Räume (z.B. "Raum 1", "Raum 2", "Flur", "Küche", Wohnzimmer", "Schlafzimmer", etc.) kann in den Kartendaten enthalten sein. Für verschiedene Robotereinsatzgebiete, wie beispielsweise unterschiedliche Stockwerke eines Hauses, können unterschiedliche Karten gespeichert werden.

Des Weiteren ist das Navigationsmodul 152 so eingerichtet, dass in den Karten virtuelle Sperrbereiche S *(virtual exclusion region)* markiert werden können, die der Roboter bei der Navigation nicht selbsttätig befährt und/oder überfahrt. Dies geschieht beispielsweise dadurch, dass die als virtueller Sperrbereich S markierten Bereiche von der Robotersteuerung 150 so behandelt werden, als ob der Sperrbereich S ein Hindernis im Einsatzgebiet des Roboters 100 darstellen würde. Um ein Befahren des Sperrbereichs S durch den Roboter 100 zu verhindern, kann deshalb die Steuereinheit 150 des Roboters 100 eine Hindernisvermeidungsstrategie (*obstacle avoidance strategy*)*,* auch als Hindernisvermeidungsalgorithmus (*obstacle avoidance algorithm*) bezeichnet, genutzt werden, die dazu eingerichtet ist, basierend auf der Position von erkannten Hindernissen, den Roboter so zu steuern, dass eine Kollision mit diesen Hindernissen vermieden wird. Basierend auf den mit den Kartendaten gespeicherten virtuellen Sperrbereich S kann die Position eines oder mehrerer Sperrbereiche bestimmt werden. Diese Positionen können nun von der Hindernisvermeidungsstrategie in gleicher Weise genutzt werden, wie wenn ein reales Hindernis an dieser Stelle stünde. Dadurch wird auf einfache Art und Weise dafür gesorgt, dass der Roboter 100 einen virtuellen Sperrbereich S nicht selbsttätig befährt und/oder überfährt. Dies soll mit folgenden Beispielen näher illustriert werden:

*Beispiel 1:* In einem einfachen Verfahren zur Steuerung eines autonomen mobilen Roboters reagiert der Roboter direkt auf den gemessenen Abstand und/oder die Relativposition zu einem Hindernis. Beispielsweise fährt der Roboter so lange geradeaus bis er 1 cm vor dem Hindernis steht, um dann die Richtung zu wechseln. Um diese Verfahren zur Steuerung des autonomen mobilen Roboters auf virtuelle Sperrbereiche zu übertragen, wird die Position des Roboters in der Karte bestimmt und - basierend auf der Position des Sperrbereichs in der Karte - der Abstand und/oder eine Relativposition (zum virtuellen Sperrbereich) bestimmt. Dies wird in geeigneten zeitlichen Abständen wiederholt.

*Beispiel 2:* In einem weiteren Verfahren zur Steuerung eines autonomen mobilen Roboters bestimmt der Roboter die Position von Hindernissen beispielsweise mittels Abstandsmessung und trägt die Position und z.B. die Kontur des Hindernisses in die Karte ein. Auf Basis der Karte findet eine Planung eines Pfades für den Roboter statt, der um das Hindernis herum führt und so eine Kollision vermeidet. Um diese Verfahren zur Steuerung des autonomen mobilen Roboters auf virtuelle Sperrbereiche zu übertragen, wird die Position eines Sperrbereichs in der Karte zumindest während der Pfadplanung wie eine Position eines Hindernisses behandelt.

*Beispiel 3:* In einem weiteren Verfahren zur Steuerung eines autonomen mobilen Roboters, wird eine Arbeitsplanung basierend auf einer Karte durchgeführt. Beispielsweise für einen Roboter zur Bodenbearbeitung (z.B. Reinigungsroboter zum Saugen, Kehren oder Wischen) wird die zu bearbeitende Fläche in einem zu bearbeitenden Gebiet bestimmt. Dies kann vor und/oder während der Bearbeitung geschehen. Zusätzlich kann während der Bearbeitung bestimmt werden, welche der zu bearbeitenden Fläche tatsächlich bearbeitet wurde. Bei der Bestimmung der zu bearbeitenden Fläche kann berücksichtigt werden, dass Flächenstücke, auf denen ein Hindernis steht, und Flächenstücke die aufgrund eines Hindernis nicht erreichbar sind, nicht bearbeitet werden müssen (bzw. können). Um diese Verfahren zur Steuerung des autonomen mobilen Roboters auf virtuelle Sperrbereiche zu übertragen, werden die Position eines Sperrbereichs in der Karte zumindest während der Arbeitsplanung wie eine Position eines Hindernisses behandelt. Das heißt insbesondere, dass die von einem Sperrbereich belegte Fläche wie die von einem Hindernis belegte Fläche nicht zu der zu bearbeitenden Fläche hinzugefügt wird.

*Beispiel 4:* In einigen Fällen kann es von Vorteil sein, nur für einen Teil der Steuerverfahren die Sperrbereiche wie ein reales Hindernis zu handhaben. Viele handelsübliche Haushaltsroboter sind kreisförmig konstruiert, so dass sie sich auf der Stelle ohne die Gefahr einer Kollision mit einem Hindernis drehen können. Bei komplexeren geometrischen Formen beispielsweise mit einer oder mehr Ecken (insbesondere im wesentlichen dreieckige) ist dies nicht mehr gewährleistet, weshalb für eine kollisionsfreie Steuerung des Roboters für jede Drehung auf der Stelle geprüft werden muss, ob es nach und während der Drehung zu einer Kollision kommen kann. Zur Vereinfachung der Steuerung eines solchen Roboters wird vorgeschlagen, virtuelle Sperrbereiche bei Translationsbewegungen des Roboters wie ein Hindernis zu behandeln und während einer Rotation des Roboters auf der Stelle den Sperrbereich zu ignorieren (im Gegensatz zu realen Hindernissen).

Im Allgemeinen ist ein virtueller Sperrbereich S eine Fläche, die der Roboter nicht befahren soll. Sie kann von einer virtuellen Begrenzung B (*virtual boundary)* und realen Hindernissen begrenzt sein. In einigen Fällen kann die virtuelle Begrenzung B das Robotereinsatzgebiet abschließen, um beispielsweise zu verhindern, dass der Roboter durch eine offene (Haus-) Tür fährt. In beiden Fällen ist die virtuelle Begrenzung B dadurch gekennzeichnet, dass sie den für den Roboter befahrbaren Bereich in einen für den Roboter freien Bereich und einen für den Roboter verbotenen Bereich unterteilt.

Der virtuelle Sperrbereich S kann beispielsweise durch Speichern der virtuellen Begrenzung B oder als Fläche mit den Kartendaten gespeichert werden. Beispielsweise können die Kartendaten in Form einer *Occupancy-Grid-Map* gespeichert werden, bei der das Robotereinsatzgebiet durch ein Raster aus Zellen repräsentiert wird, wobei für jede Zelle Informationen gespeichert werden, z.B. ob eine bestimmte Zelle durch ein Hindernis besetzt ist. Um einen Sperrbereich S in der Karte zu markieren, können die zu dem Sperrbereich S gehörenden Zellen als entsprechend besetzte Zellen markiert werden.

Der virtuelle Sperrbereich S kann als geometrische Grundfigur wie ein Kreis, Quadrat, Rechteck oder ein regelmäßiges Vieleck abgespeichert werden, was den Vorteil eines reduzierten Speicherplatzbedarfs hat. Beispielsweise genügt bei einem Kreis das Speichern der Position des Mittelpunkts und des Radius. Um komplexere geometrische Formen für den virtuellen Sperrbereich S zu ermöglichen, kann die virtuelle Begrenzung B des virtuellen Sperrbereichs S beispielsweise in Form eines Linienzugs (Polygonzug) gespeichert werden. Zu der virtuellen Begrenzung B kann auch jener Flächenbereich abgespeichert werden, welcher für den Roboter gesperrt sein soll. Hierzu kann zu der virtuelle Begrenzung B eine Orientierung abgespeichert werden, so dass unterschieden werden kann, auf welcher Seite der virtuellen Begrenzung B sich der Roboter befindet bzw. befinden muss (z.B. immer rechts von der Begrenzung B). Insbesondere kann unterschieden werden, ob der Roboter sich der virtuellen Begrenzung B aus einer ersten oder aus einer zweiten Richtung (also z.B. von links oder von rechts) nähert, wobei die zweite Richtung der ersten Richtung entgegengesetzt ist. Dies geschieht beispielsweise indem der Linienzug als gerichtete Segmente bzw. Vektoren mit Anfangs- und Endpunkt gespeichert wird. So kann beispielsweise die rechte Seite der Begrenzung B als befahrbar definiert werden.

Die virtuelle Begrenzung B kann so behandelt werden, dass sie von der gesperrten Fläche in die freie Fläche überfahren werden kann, wohingegen die entgegengesetzte Richtung gesperrt ist. Das heißt, wenn sich der Roboter aus der ersten Richtung (z. B. von rechts) der virtuellen Begrenzung B nähert, so wird sie dahingehend berücksichtigt, dass der Roboter sie nicht selbsttätig befährt und/oder überfährt. Sie wird also beispielsweise wie ein Hindernis behandelt (wie zuvor beschrieben). Der Roboter nutzt also zum Navigieren einen Hindernisvermeidungsalgorithmus, der die virtuelle Begrenzung B in gleicher Weise berücksichtigt wie eine von den Sensoren des Roboters detektierte reale Begrenzung eines realen Hindernisses, sofern sich der Roboter auf den durch die Begrenzung definierten Sperrbereich (also z.B. von rechts kommend) zubewegt. Wenn sich der Roboter aus der zweiten entgegengesetzten Richtung (z. B. von links) der virtuellen Begrenzung B nähert, so hat sie keine Auswirkung. Der Roboter kann sie also überfahren.

An dieser Stelle sei angemerkt, dass eine derartige virtuelle Begrenzung B neben der dauerhaften Eingrenzung virtueller Sperrbereiche, auch temporär genutzt werden kann. Beispielsweise kann sie genutzt werden, um einen Teilbereich abzugrenzen, in dem der Roboter eine konkrete Aufgabe (z. B. Reinigung) erfüllen soll. Die virtuelle Begrenzung B ist dann so lange aktiv, bis der Roboter die Aufgabe abgeschlossen oder unterbrochen hat. Dies hat den Vorteil, dass der Roboter in das zu bearbeitende Gebiet hineinfahren kann. Es werden jedoch keine zusätzlichen komplexen Kontrollverfahren benötigt, um den Roboter in dem zu bearbeitenden Gebiet zu halten (da ja in diesem Beispiel alles außerhalb des zu bearbeiteten Bereichs als virtuelles Sperrgebiet definiert ist). Im einfachsten Fall wird von der Robotersteuerung 150 nur die Hindernisvermeidungsstrategie und eine Strategie zur Erledigung der Aufgabe in einem geschlossenen Raum genutzt.

*Definieren virtueller Sperrbereiche* - Um virtuelle Sperrbereiche S zu den Kartendaten hinzuzufügen, kann eine Eingabe eines Nutzers über eine Mensch-Maschine-Schnittstelle 200 (HMI) erfolgen. Die vom Nutzer in die HMI 200 eingegebenen Informationen über den virtuellen Sperrbereich S können nach vorgebbaren Kriterien bewertet (ausgewertet) werden. So kann beispielsweise abhängig von dieser Bewertung (Auswertung) bestimmt werden, ob und/oder in welcher Form der Sperrbereich S gespeichert wird. Diese Vorgehensweise wird in den folgenden, in Fig. 2 dargestellten Beispielen verdeutlicht.

Figur 2 illustriert exemplarisch die Eingabe eines virtuellen Sperrbereichs S über die HMI 200 (z. B. ein Tablet-PC). Zu diesem Zweck ist die HMI 200 dazu ausgebildet, die Kartendaten in Form einer für den Menschen verständlichen Karte darstellen. In diese Karte kann der Nutzer die Informationen über einen neu zu definierenden virtuellen Sperrbereich S eintragen.

Diagramm A der Fig. 2 zeigt das Eintragen eines neuen Sperrbereichs S mittels einer (zweidimensionalen) geometrischen Grundform *(geometric shape)* wie beispielsweise einem Quadrat, Rechteck, Rhomboid, Kreis, etc. Die Größe und Orientierung wird beispielsweise durch die Position der Finger des Nutzers auf einem Touch-Screen 201 der HMI 200 bestimmt. Die Orientierung der Grundfigur kann durch den Nutzer festgelegt werden. Alternativ kann die Orientierung zumindest teilweise basierend auf den Kartendaten festgelegt werden. Beispielsweise kann eine Seite der Grundform (z.B. Quadrat) parallel zu einer nahen Wand ausgerichtet werden. Die Position und Größe des Sperrbereichs S kann ebenfalls durch den Nutzer festgelegt werden oder zumindest teilweise basierend auf den bereits existierenden Kartendaten bestimmt werden. So kann beispielsweise ein in einer Zimmerecke eingetragener virtueller Sperrbereich S so erweitert und/oder verschoben werden, dass er mit den Wänden abschließt. Dies ist insbesondere dann sinnvoll, wenn der Bereich zwischen Wand und Sperrbereich S schmaler ist, als der vom Roboter zum Navigieren benötigte Platz.

Diagramm B der Fig. 2 illustriert das Festlegen eines Sperrbereichs mittels einer virtuellen Begrenzung B. Dadurch kann der Nutzer beispielsweise dem Roboter den Zugang zu einer Zimmerecke verwehren, indem er eine virtuelle Begrenzung B in Form einer Linie oder eines (offenen oder geschlossenen) Polygonzugs festlegt. Der so festgelegte Sperrbereich S wird durch die virtuelle Begrenzung B und die Wände definiert. Die Eingabe des Nutzers auf dem Touch-Screen muss dahingehend analysiert werden, ob eine Fläche und ggf. welche Fläche durch virtuelle Begrenzung B gesperrt werden soll. So kann beispielsweise von der HMI 200 geprüft werden, ob die vom Nutzer eingegebene virtuelle Begrenzung B das in der Karte dargestellte Robotereinsatzgebiet in zumindest zwei zusammenhängende Teilbereiche unterteilt. Das ist beispielsweise dann der Fall, wenn die virtuelle Begrenzung B durch einen geschlossenen Polygonzug repräsentiert wird, oder, wenn die virtuelle Begrenzung B zwei oder mehr Hindernisse (z.B. zwei an Zimmerecke zusammenlaufende Wände) verbindet. Ein Teilbereich des Robotereinsatzgebiets umfasst dabei alle möglichen Positionen, die der Roboter von einer innerhalb des Teilbereichs liegenden Position erreichen kann ohne die virtuelle Begrenzung B zu überfahren. Diese Erreichbarkeit kann beispielsweise mit Hilfe von Pfadplanungsalgorithmen bestimmt werden. In einigen Fällen wie beispielsweise bei einem Zimmer mit zwei Türen, die jeweils durch eine virtuelle Begrenzung B für den Roboter 100 geschlossen werden sollen, können mehrere Linien (Segmente einer virtuellen Begrenzung B) notwendig sein, um das Robotereinsatzgebiet in zumindest zwei Teilbereiche (den virtuellen Sperrbereich S und den restlichen Teil des Robotereinsatzgebietes) zu teilen.

Wenn das Robotereinsatzgebiet in zumindest zwei Zusammenhangskomponenten unterteilt wird, so kann automatisiert geprüft werden, welche der Zusammenhangskomponenten gesperrt werden soll. Mögliche Kriterien hierfür sind, dass die größte Zusammenhangskomponente und/oder die Zusammenhangskomponente, in der die Basisstation 110 und/oder der Roboter 100 sich befinden, als Einsatzgebiet angesehen werden, und entsprechend alle anderen Zusammenhangskomponenten als virtueller Sperrbereich S abgespeichert werden.

Wenn automatisiert keine eindeutige Entscheidung über einen neu anzulegenden virtuelles Sperrbereich S getroffen werden kann (z.B. weil die Nutzereingabe unklar, unplausibel oder mehrdeutig ist), so kann eine Warnung und/oder Rückfrage an den Nutzer gestellt werden. Beispielsweise könnte der Nutzer einen Bereich, in der die Basisstation 110 des Roboters steht, als Sperrbereich definieren, beispielsweise die rechte obere Ecke des Zimmers in dem im Diagramm B der Fig. 2 dargestellten Beispiel. Bei der Analyse der Nutzereingabe würde festgestellt, dass es einen großen und einen sehr kleinen (Zimmerecke) Teilbereich gibt, wobei in dem kleinen Teilbereich die Basisstation 110 des Roboters 100 steht. Diese Unterteilung kann als unplausibel angesehen werden, weshalb unklar ist, welchen Bereich der Nutzer tatsächlich absperren will. Der Nutzer kann über diesen Umstand über die HMI 200 informiert werden (z.B. mittels einer Nachricht am Touchscreen), was dem Nutzer die Möglichkeit gibt, festzustellen, dass er irrtümlich eine falsche Ecke des Zimmers abgesperrt hat. Alternativ kann er aus den automatisch ermittelten Teilbereichen einen oder mehrere als neu anzulegenden virtuellen Sperrbereich S auswählen. Gegebenenfalls kann der Nutzer nun die Basisstation an eine neue Position stellen und den Roboter 100 durch eine entsprechende Nutzereingabe darüber informieren.

Diagramm C der Fig. 2 illustriert ein weiteres Beispiel, wie der Benutzer einen virtuellen Sperrbereich definieren kann. Demnach kann der Nutzer den virtuellen Sperrbereich S durch flächige Markierung definieren. Dies geschieht beispielsweise durch wischende Bewegung des Fingers. Die Eingabe des Nutzers ist hierbei recht grob und muss dahingehend analysierte werden, wo eine geeignete virtuelle Begrenzung B des virtuellen Sperrbereichs liegt. Dies geschieht beispielsweise durch Bilden der konvexen Hülle um die flächige Markierung oder durch Überdecken der flächigen Markierung mit einem oder mehreren Rechtecken (oder anderer geometrischer Grundfiguren). Dies kann beispielsweise das Rechteck minimaler Fläche sein, welches die flächige Markierung umschließt. Zusätzlich können auch in den Kartendaten gespeicherte Hindernisse berücksichtigt werden. So kann beispielsweise eine Seite des Rechtecks parallel zu einem nahen Hindernis (z.B. eine Wand) ausgerichtet werden.

Diagramm D der Fig. 2 illustriert ein weiteres Beispiel, wie der Benutzer einen virtuellen Sperrbereich definieren kann. Demnach kann der Nutzer die Sperrfläche ausgehend von einem Hindernis (z.B. eine Wand) oder einer anderen Landmarke festlegen. Beispielsweise berührt er hierzu das Hindernis auf dem Touchscreen und zieht einen gewünschten Abstand von dem Hindernis weg, um so die virtuelle Sperrfläche S aufzuspannen. Mittels dieser Vorgehensweise, ist es einfach, einen virtuellen Sperrbereich S so zu definieren, dass der Roboter 100 einen konstanten Abstand zu dem jeweiligen Hindernis einhält. Zusätzlich oder alternativ kann der Nutzer auch direkt den Abstand (z. B. 85 cm) zu dem Hindernis einstellen. Die Eingabe des Nutzers muss dabei dahingehend analysiert werden, ob aus den vom Nutzer eingegebenen Parametern (z.B. Abstand zum Hindernis), dem bezeichneten Hindernis und gegebenenfalls anderen angrenzenden Hindernissen die virtuelle Begrenzung B und somit der virtuelle Sperrbereich S eindeutig bestimmt werden kann.

Der virtuelle Sperrbereich S, der durch einen konstanten Abstand von einem Hindernis (insbesondere Wand) definiert ist, muss nicht unbedingt entlang der gesamten Länge des Hindernisses verlaufen. Der Nutzer kann den Sperrbereich weiter einschränken. Dies kann beispielsweise mit einer Verknüpfung geschehen. Um beispielsweise den Bereich einer Zimmerecke (mit zwei Wänden) zu sperren, kann der Nutzer einen ersten Abstand zu der ersten Wand und einen zweiten Abstand zu einer zweiten Wand festlegen. Die Verknüpfung (die Schnittmenge) dieser beiden so definierten Bereiche ist der gewünschte Sperrbereich S. Dies hat insbesondere den Vorteil, dass hierdurch ein virtueller Sperrbereich sehr präzise durch den Nutzer festlegbar ist.

Das Hindernis, zu dem der Roboter 100 einen von dem Nutzer definierbaren Abstand einhalten soll, muss nicht notwendigerweise eine Wand sein. Figur 3A zeigt beispielhaft einen Barhocker H, dessen Standfuß für einen autonomen mobilen Roboter 100 nur schwer zu befahren und auch schwer zu detektieren ist. Es kann von Vorteil sein, wie in Figur 3B dargestellt, eine virtuelle Sperrfläche S ausgehend von dem als Hindernis H detektierbaren Teil des Barhockers zu definieren, so dass der Roboter 100 zukünftig automatisch den Standfuß des Barhockers H meidet. Die Sperrfläche ist hierbei beispielsweise ein Kreis, dessen Mittelpunkt und Durchmesser durch die Position und Größe des Standfußes des Barhockers festgelegt ist. Da die Position des Barhockers nicht fest ist, besitzt ein so definierter Sperrbereich S ebenfalls keine feste Position. Vielmehr würde die Position des Sperrbereichs S bei jedem Robotereinsatz basierend auf den Sensormessungen des Roboters 100 neu bestimmt. Beispielsweise kann der Roboter mit einer Kamera und Bilderkennung den Barhocker als solchen wiedererkennen. Alternativ kann beispielsweise zusammen mit den Kartendaten gespeichert werden, dass in einem Teilgebiet (wo die Barhocker gewöhnlich stehen) um Hindernisse vorgegebener Größe (entsprechend dem detektierbaren Teil H des Barhockers) ein virtueller Sperrbereich S um die Hindernisse zu berücksichtigen ist. Der virtuelle Sperrbereich ist also nicht mit absoluten Koordinaten in der Karte gespeichert, sondern relativ zu einem Hindernis. Verändert sich die Position des Hindernisses, verschiebt sich der virtuelle Sperrbereich entsprechend.

Bei der hier beschriebenen Vorgehensweise wird die Lage des virtuellen Sperrbereichs S mit einem lokalen Bezug (d.h. relativ) zu einem Hindernis oder Landmarke gespeichert und nicht mit globalen Koordinaten des für die Roboternavigation genutzten globalen Koordinatensystems. Hierdurch wird ein robusteres Berücksichtigen des virtuellen Sperrbereichs S und ein präzises Entlangfahren am virtuellen Sperrbereich S ermöglicht, da dieser in diesem Fall auf aktuellen Sensormessungen basiert. Beispielsweise kann der Nutzer so einen nur wenige Zentimeter (z. b. 5 cm) breiten Bereich parallel zu einer frei wählbaren Wand sperren. Wie im Beispiel des Barhockers (vgl. Fig. 3) können virtuelle Sperrbereiche S definiert werden, die sich bei einer Änderung der Position eines Hindernisses oder Landmarke in der Karte mit diesenm mitbewegen. Eine Änderung der Position kann beispielsweise durch eine Bewegung (z.B. durch verschieben) des Hindernisses in der Umgebung oder durch Korrektur (z.B. von Messfehlern) einer in den Kartendaten verzeichneten Position zustande kommen.

Die Eingabe von Information betreffend einen virtuellen Sperrbereich S muss nicht ausschließlich anhand einer Kartendarstellung erfolgen. Beispielsweise kann die HMI 200 so gestaltet sein, dass sie Gesten des Nutzers erkennt. Beispielsweise kann der Nutzer durch direktes Zeigen (auf den Sperrbereich) den Umriss des virtuellen Sperrbereichs S beschreiben. Zum Erkennen von Gesten dient beispielsweise eine Kamera oder eine 3D-Kamera, die im Roboter integriert sein kann. Die Eingabe des Nutzers muss hierbei dahingehend analysiert werden, an welcher Stelle der Benutzer sich befindet, und an welche Stelle die entsprechenden Gesten des Nutzers weisen, um so die virtuelle Begrenzung B und den Sperrbereich S zu bestimmen.

Als weitere Option können Informationen betreffend eine virtuelle Sperrfläche S auch während einer Lernfahrt des Roboters 100 eingegeben werden, wobei die Analyse der eingegebenen Informationen auch die aktuelle Position und Orientierung des Roboters berücksichtigt. So kann der Nutzer schon während der Roboter 100 erstmals sein Einsatzgebiet erkundet auf zu meidende Gebiete hinweisen. Dies geschieht beispielsweise abhängig von der Position und Orientierung des Roboters. So kann der Nutzer - beispielsweise durch eine Spracheingabe "Stop, nicht in diese Ecke fahren" - den Roboter darauf hinweisen, dass ein Bereich in jener Zimmerecke, auf die er gerade zufährt, ein virtueller Sperrbereich werden soll. Auf gleiche Weise kann der Nutzer den Roboter anweisen zu dem Hindernis, welches er gerade erkundet, einen durch den Nutzer bestimmten Abstand einzuhalten. Die Eingabe dieser Information kann durch vordefinierte Befehle auf der HMI 200 (z.B. eine Fernbedienung oder einem Tablet-PC) erfolgen. Wie erwähnt kann (alternativ oder ergänzend) die Eingabe der Information auch in Form von Sprachkommandos erfolgen, die über ein im Roboter 100 oder in der HMI 200 integriertes oder ein externes Mikrofon aufgenommen und analysiert werden. Alternativ oder ergänzend können weitere Hilfsmittel zur Eingabe der Information genutzt werde. So kann beispielsweise ein Laserpointer, der dazu eingerichtet ist, eine Linie zu erzeugen, vom Nutzer verwendet werden, um eine Linie auf die Bodenfläche zu projizieren. Deren Position und Verlauf kann der Roboter beispielsweise mit einer Kamera detektieren und als virtuelle Begrenzung B einer virtuellen Sperrfläche S zusammen mit den erstellten Kartendaten speichern. Alternativ oder ergänzend können während der Lernfahrt gängige Markierungen wie Magnetbänder oder Infrarotschranken genutzt werden, um den Roboter über nicht zu befahrene Bereiche zu informieren. Deren Verlauf würde der Roboter mit seinen Sensoren erkunden und eine hierzu korrespondierende virtuelle Sperrfläche S zusammen mit den erstellten Kartendaten speichern. Hierdurch ist es möglich die Markierungen nach der Lernfahrt wieder zu entfernen.

*Prüfen von nutzerdefinierten Sperrbereichen* - Virtuelle Sperrbereiche S, die basierend auf von einem Nutzer erhaltenen Informationen erstellt werden, können zu unerwartetem und ungewolltem Verhalten des Roboters führen. Deshalb ist es nicht nur wichtig, die vom Nutzer eingegebenen Informationen im Hinblick darauf zu analysieren, wie der vom Nutzer gewünschte virtuelle Sperrbereich S festzulegen ist, sondern auch im Hinblick darauf, wie der Sperrbereich sich auf die Funktionsfähigkeit des Roboters auswirkt. Hierzu können beispielsweise mehrere Kriterien überprüft werden, bei deren Nichterfüllung (bzw. Verletzung) ein Abspeichern des virtuellen Sperrbereichs S verweigert wird oder erst nach expliziter Bestätigung durch den Nutzer erfolgt. Davor kann eine entsprechende Information, warum das Abspeichern des virtuellen Sperrbereich S nicht erfolgt, an den Nutzer gesendet werden.

So kann beispielsweise geprüft werden, ob sich der Roboter teilweise und/oder vollständig in dem neu anzulegenden virtuellen Sperrbereich S befindet. Wenn dies der Fall ist, so kann der Nutzer hierauf hingewiesen werden und gefragt werden, wie der Roboter 100 hiermit umgehen soll. So kann das Speichern des virtuellen Sperrbereichs S unterlassen werden. Alternativ kann der Nutzer den virtuellen Sperrbereich S speichern und den Roboter anweisen diesen zu verlassen. In einer weiteren Alternative kann der Nutzer den Roboter 100 anweisen, stehen zu bleiben, um ihn später aus dem Sperrbereich herauszuholen.

Des Weiteren kann geprüft werden, ob der Roboter - unter Berücksichtigung des virtuellen Sperrbereichs S - eine geplante Aufgabe sinnvoll ausführen kann und/oder ob er für die Roboterfunktion wichtige Orte eigenständig anfahren kann. Das umfasst beispielsweise, dass der Roboter 100 von seiner aktuellen Position aus die Basisstation 110 anfahren kann, und dass die Basisstation 110 sich nicht in einem Sperrbereich befindet. Zudem kann beispielsweise geprüft werden, ob ausgehend von der aktuellen Roboterposition und/oder der Basisstation 110 das nicht zum Sperrbereich gehörende Robotereinsatzgebiet weitgehend ungestört angefahren werden kann. So kann beispielsweise ein Speichern eines virtuellen Sperrbereichs S verhindert werden, wenn durch diesen Sperrbereich S ein anderer Bereich des Einsatzgebiets, der beispielsweise größer als eine vorgebbare Maximalgröße ist, unzugänglich oder nur über einen großen Umweg erreichbar wird. Insbesondere kann das Robotereinsatzgebiet in mehrere Teilgebiete, die beispielsweise den Räumen einer Wohnung oder Teilen hiervon entsprechen, unterteilt sein. Wenn durch einen virtuellen Sperrbereich S solch ein Teilgebiet nicht mehr erreichbar (also blockiert) ist, so kann der Nutzer hierüber informiert werden. Der Nutzer kann die Möglichkeit haben, das Speichern des virtuellen Sperrbereichs S nochmals zu bestätigen, um diesen trotz starker Einschränkung des Robotereinsatzgebiets dauerhaft zu speichern.

Um zu ermitteln, ob ein bestimmter Bereich erreichbar bzw. blockiert ist, können an sich bekannte Pfadplanungsalgorithmen genutzt werden. So kann beispielsweise bestimmt werden, ob ein Weg von der aktuellen Roboterposition zu der Basisstation 110 existiert, wenn der neu zu erstellende virtuelle Sperrbereich dahingehend berücksichtigt wird, dass er nicht eigenständig befahren und/oder durchfahren werden darf. In analoger Weise kann für alle Teile des Robotereinsatzgebiets bestimmt werden, ob ein Weg von der Basisstation zu diesem Teilgebiet existiert. Insbesondere wird ein Bereich der Karte als nicht erreichbar bzw. blockiert angesehen, wenn ein Verbindungskorridor zu diesem Bereich schmaler als ein vorgebbarer Grenzwert ist. Der Grenzwert entspricht beispielsweise dem Roboterdurchmesser plus ein Sicherheitsaufschlag, den der Roboter für eine sichere und zuverlässige Navigation und Steuerung durch den Korridor benötigt. Der Sicherheitsaufschlag kann einer maximalen Lokalisierungsunsicherheit des Navigationsmoduls 152 entsprechen, welche beispielsweise während eines SLAM-Verfahrens ermittelt wird.

Falls detektiert wird, dass durch einen virtuellen Sperrbereich S ein anderer Teilbereich des Robotereinsatzgebietes unzugänglich wird, kann weiter geprüft werden, ob durch eine geringfügige Abänderung des virtuellen Sperrbereichs S der unzugängliche Teilbereich wieder zugänglich wird. So ist beispielsweise die Eingabe über eine Karte häufig ungenau und ein leicht abgeänderter Sperrbereich entspricht immer noch den Wünschen und Bedürfnissen des Nutzers. Wenn beispielsweise ein durch den Sperrbereich S eingeschränkter Korridor zu einem dahinter liegenden Bereich nur so breit wie der Roboter selbst ist, so kann durch eine geringfügige Verkleinerung des Sperrbereichs die Erreichbarkeit des dahinter liegende Bereichs ermöglicht werden. Beispielsweise kann zur Prüfung, ob eine leichte Abänderung des virtuellen Sperrbereichs S die Kriterien erfüllt, die virtuelle Begrenzung B verschoben oder verformt werden. Wenn die virtuelle Begrenzung durch einen (offenen oder geschlossenen) Polygonzug gegeben ist, so können beispielsweise die Eckpunkte des Polygonzugs verschoben werden.

*Bereiche ohne Arbeitsauftrag* - Es ist nicht immer möglich, einen Bereich, in dem der autonome mobile Roboter 100 potenziell Schaden anrichten kann, als virtuellen Sperrbereich S vollständig von der Befahrung durch den Roboter 100 auszuschließen. Beispielsweise kann das ein Flur sein, der alle Räume verbindet, die der Roboter 100 reinigen soll. Diesen Flur muss der Roboter 100 befahren, da er sonst in den anderen Räumen seine Aufgabe nicht durchführen kann. Des Weiteren kann es sein, dass im Flur häufig Schuhe herumstehen, deren Schnürsenkel sich um Aktoren wie eine rotierende Bürste wickeln können. Hierdurch können einerseits die Schuhe beschädigt, und der Roboter 100 bei der Durchführung seiner Aufgabe behindert werden. Ein weiteres Beispiel ist ein empfindlicher Teppich, den der Roboter 100 nicht mit einem Aktor wie z.B. einer Bürste bearbeiten soll, der aber in einem zentralen Bereich liegt, den der Roboter 100 nicht umfahren kann.

Im Hinblick auf die beschriebene Problematik, kann es sinnvoll sein, den Flur von der autonomen Bearbeitung auszunehmen. Der Roboter kann also dazu ausgebildet sein, mindestens drei Kategorien von virtuellen Bereichen zu unterscheiden. In einem virtuellen Bereich der ersten Kategorie kann der Roboter selbsttätig navigieren und eine definierte Aufgabe durchführen. In einem virtuellen Bereich der zweiten Kategorie kann der Roboter eigenständig navigieren, aber ein eigenständiges Durchführen einer Aufgabe wird unterlassen. Bereiche der dritten Kategorie sind die oben erläuterten Sperrbereiche. Diese werden beim Navigieren des Roboters 100 dahingehend berücksichtigt, dass der Roboter 100 diese Bereiche nicht eigenständig befährt und/oder durchfährt.

Die Definition der virtuellen Bereiche erfolgt beispielsweise durch den Nutzer wie oben in Bezug auf die Sperrbereiche S erläutert. Insbesondere kann dem Nutzer (vom Roboter oder der HMI) automatisch vorgeschlagen werden, einen virtuellen Sperrbereich, der die Funktionsweise des Roboters beeinträchtigen würde, von der Bearbeitung auszunehmen, aber für die Befahrung zu verwenden. Das heißt aus einem Sperrbereich wird ein Bereich der zweiten Kategorie, der zwar normal befahren werden kann, in dem jedoch keine Bearbeitung des Bodens erfolgt. Zudem kann angenommen werden, dass ein Bereich solange zur ersten Kategorie gehört (also keine Einschränkung bzgl. Befahrbarkeit und Ausführung einer Tätigkeit), bis ein Nutzer eine gegenteilige Anweisung gibt.

Des Weiteren würde der Roboter beim Verrichten seiner Aufgabe den von der Bearbeitung ausgenommenen Bereich (zweite Kategorie) möglichst selten und auf direktem Weg durchfahren. So wird der Roboter diesen Bereich erst befahren, wenn dies für seine Aufgabe notwendig ist, um den dahinter liegenden Bereich des Robotereinsatzgebiets zu erreichen. Anschließend wird er erst in diesen Bereich zurückkehren, wenn die Aufgabe des Roboters soweit möglich abgeschlossen ist. Beim Durchqueren dieses Bereichs wird darauf geachtet den kürzesten und/oder schnellsten Weg zu nutzen. Alternativ oder zusätzlich kann auch ein Weg gewählt werden, der soweit möglich einen vorgebbaren Mindestabstand zu Hindernissen hält. Wenn der Mindestabstand nicht eingehalten werden kann, weil der Roboter zum Erreichen seines Ziels zwischen zwei Hindernissen durchfahren muss, deren Abstand kleiner als der Doppelte Mindestabstand ist, so wird ein Pfad gewählt, der den Abstand zu beiden Hindernissen möglichst groß wählt, also insbesondere mittig zwischen beiden Hindernissen hindurch führt. Methoden zum Erreichen eines solchen Pfades sind an sich bekannt. Beispielsweise kann die Pfadplanung mittels Kostenfunktion benutzt werden, bei der Kosten unter anderem basierend auf dem Abstand zu Hindernissen bestimmt werden können und schließlich der Pfad mit den geringsten Kosten zur Robotersteuerung genutzt wird. Alternativ oder zusätzlich können reaktive Steuermetoden (z.B. virtuelle Kraftfeldanalyse/ *virtual force field* (VFF)) genutzt werden, bei denen der Roboter direkt auf den Abstand der umgebenden Hindernisse reagiert.

Letzteres kann beispielsweise im Rahmen der Arbeitsplanung *(task planning)* mittels einer Kostenfunktion erreicht werden. Hierzu werden beispielsweise die "Kosten" für die Befahrung des von der Bearbeitung ausgenommenen Bereichs deutlich höher angesetzt, als die Kosten für das Fahren im zu bearbeitenden Bereich. Beispielsweise kann eine Bewegung um einen Meter im von der Bearbeitung ausgenommenen Bereich so gewertet werden wie eine Bewegung um zehn Meter im zu bearbeitenden Bereich. Hierdurch würde der Roboter auch deutliche Umwege in Kauf nehmen, um den von der Bearbeitung ausgeschlossenen Bereich zu vermeiden. Das Konzept der Verwendung von Kostenfunktionen bei der Pfadplanung an sich ist bekannt.

*Anzeige der Sperrbereiche* - Ein wichtiger Aspekt eines benutzerdefinierten virtuellen Sperrbereichs S ist, dass der Nutzer schnell, einfach und direkt die Auswirkungen seiner Einstellungen sieht. Hierfür dient unter anderem eine Anzeige in der Mensch-Maschine-Schnittstelle beispielsweise in Form einer Karte. Da diese Karte eine vereinfachte Darstellung des Robotereinsatzgebietes und daher ungenau sein kann, ist eine direkte Wiedergabe der virtuellen Begrenzung B des virtuellen Sperrbereichs S vorteilhaft. Auch bei anderen Nutzereingaben, wie beispielsweise der Eingabe von nutzerdefinierten Teilgebieten mit einer virtuellen Begrenzung (z. B. um diese später schnell für eine Reinigung auszuwählen) oder der Eingabe direkt zu bearbeitende Flächen, können die hier erläuterten Vorgehensweisen von Vorteil sein.

Gemäß einem Beispiel nimmt der Roboter 100 zunächst ortsbezogene Informationen beispielsweise über einen virtuellen Sperrbereich mit Hilfe einer Mensch-Maschine-Schnittstelle 200 von einem Nutzer entgegen. Aus dieser vom Nutzer eingegebenen ortsbezogenen Information werden eine oder mehrere Linien (z.B. ein Rechteck, ein offener oder ein geschlossener Polygonzug, etc.) ermittelt, die beispielsweise die virtuelle Begrenzung B des Sperrbereichs S repräsentieren (vgl. Fig. 2). Wie erwähnt ist die Darstellung der Karte des Robotereinsatzgebietes eine ungenaue Abstrahierung der Realen Umgebung. Es ist daher wünschenswert, dem Nutzer ein realistischeres Feedback (realistischer als die Kartendarstellung) über die Auswirkung eines über die HMI 200 definierten Sperrbereichs zu geben. Der Roboter kann unter Berücksichtigung des nutzerdefinierten Sperrbereichs S einen Pfad bestimmen und diesen abfahren. Der Pfad kann hierbei einmalig, mehrmals oder bis zu einer Unterbrechung durch den Nutzer abgefahren werden. Beispielsweise kann der Roboter so entlang der virtuellen Begrenzung B des Sperrbereichs S fahren, dass der Sperrbereich nicht befahren und/oder durchfahren wird.

Die oben beschriebene Art der Visualisierung ist nicht nur bei Sperrbereichen möglich, sondern bei beliebigen Teilgebieten. Bei einem neu definierten Teilgebiet (z.B. ein Teil eines Zimmers) eines Robotereinsatzgebietes kann der Roboter direkt entlang der (virtuellen) Begrenzung des Teilgebietes fahren. Bei einem benutzerdefinierten zu reinigenden Bereich (innerhalb eines Zimmers) kann der Roboter beispielsweise im Inneren der zu bearbeitenden Fläche entlang der virtuellen Begrenzung entlangfahren, um so dem Nutzer zu demonstrieren, welche Fläche bearbeitet werden wird. Durch diese realistische Demonstration bekommt der Nutzer einen direkten Eindruck über die Auswirkungen seiner Eingabe. Der Nutzer kann nun über die HMI 200 seine eingegebene Information bzw. die hieraus abgeleiteten Kartendaten (z.B. Polygonzug) dauerhaft abspeichern, so dass sie zukünftig für die Robotersteuerung genutzt werden können. Des Weiteren hat der Nutzer die Chance, zu erkennen, dass seine Eingabe nicht das gewünschte Roboterverhalten erzeugt, und seine Eingabe zu korrigieren und/oder neue ortsbezogene Informationen einzugeben. Eine Korrektur der Nutzereingabe kann direkt in einen neuen korrigierten Roboterpfad umgesetzt werden (für eine erneute Demonstration durch den Roboter).

Eine weitere Möglichkeit, dem Nutzer eine möglichst schnelle, einfache und direkte Rückmeldung über seine Eingabe zu geben, ist eine direkte Projektion der Information in die Umgebung. Hierzu wird beispielsweise ein Laserprojektor genutzt, der mit Hilfe von beweglichen Spiegeln und einem oder mehr Lasern als Lichtquelle gezielt Linien, Formen, Muster oder Bilder in die Umgebung (z.B. auf den Boden) projiziert. Der Projektor kann an einer festen Position im Raum, auf dem autonomen mobilen Roboter 100 oder auf einem weiteren autonomen mobilen Roboter 100B montiert sein.

In dem in Fig. 4 dargestellten Beispiel ist ein Projektor 190 auf oder an dem automobilen Roboter 100 angeordnet oder in diesen integriert. Die dargestellte Anordnung hat den Vorteil, dass der Projektor 190 an (fast) jede beliebige Stelle des Robotereinsatzgebiets transportiert werden kann. Insbesondere kann der Roboter 100 an eine geeignete Stelle fahren, von der aus die Projektion erfolgen kann. So kann anhand der Kartendaten und der Sensordaten eine Position ermittelt werden, von der aus ohne störende Hindernisse die benötigte Information an die gewünschte Stelle des Robotereinsatzgebiets (insbesondere die Bodenfläche) projiziert werden kann. Wenn an dieser Position festgestellt wird, dass durch ein neues Hindernis oder einen herumstehenden Nutzer eine ungestörte Projektion an die gewünschte Stelle nicht möglich ist, kann der Roboter 100 eine alternative geeignete Position anhand der Kartendaten und der Sensordaten suchen.

Bei dieser Vorgehensweise besteht eine Besonderheit darin, dass die ortsbezogene Information (z.B. Begrenzungslinien, geometrische Grundformen, die ein Sperrgebiet repräsentieren, etc.) direkt auf den betroffenen Ort projiziert und so für den Nutzer veranschaulicht werden kann. Für die Berechnung der Projektion wird die Position und Orientierung des Roboters 100 im Robotereinsatzgebiet benutzt. Position und Orientierung sind aufgrund der Funktionsweise des autonomen mobilen Roboters mit hoher Genauigkeit bekannt ist. Zusätzlich wird die Position und Orientierung des Projektors 190 im oder am Roboter 100 benutzt, die aufgrund der Konstruktion des Roboters ohnehin bekannt ist. Hieraus kann bestimmt werden, wie die Lichtstrahlen in die Umgebung projiziert (bzw. die Spiegel und der/die Laser gesteuert) werden müssen, damit sie die durch die Kartendaten bestimmten Punkte in der Umgebung des Roboters (insbesondere auf der Bodenfläche) treffen. Es ist somit möglich, aus den Kartendaten ortsbezogene Informationen zu extrahieren und diese mit dem Projektor an den zugehörigen realen Positionen im Robotereinsatzgebiet anzuzeigen.

Auf die oben beschriebene Weise kann z.B. die virtuelle Begrenzung B (siehe z.B. Fig. 2B) durch direkte Projektion auf den Boden für den Nutzer sichtbar gemacht werden. Zusätzlich oder alternativ kann der virtuelle Sperrbereich S durch direkte Projektion auf den Boden für den Nutzer sichtbar gemacht werden. Auf gleiche Weise lassen sich weitere Kartendaten wie z.B. eine zu reinigende Fläche oder ein benutzerdefiniertes Teilgebiet darstellen. Zusätzlich können mit Hilfe des Projektors 190 andere insbesondere durch den Roboter 100 erstellte Kartendaten direkt in das Einsatzgebiet des Roboters projiziert werden. Dies kann beispielsweise der vom Roboter 100 gerade gereinigte Bereich oder der als nächstes zu reinigende Bereich sein. So kann beispielsweise ein Nutzer z.B. vor einer frisch gewischten Stelle und der hiermit verbundenen Rutschgefahr gewarnt werden.

Gemäß einem Ausführungsbeispiel kann die durch den Projektor 190 angezeigte Information unmittelbar aus der aktuellen Position des Roboters 100 und (optional) seiner Geschwindigkeit und/oder seiner aktuell ausgeführten Aufgabe bestimmt werden. So kann beispielsweise der unmittelbar geplante Weg des Roboters auf die Bodenfläche projiziert werden. Hierdurch wird das Roboterverhalten für den Nutzer vorhersehbarer und ungewollte Störungen des Arbeitsablaufs können vermieden werden.

*Automatisches Erzeugen von Sperrbereichen* - Ein virtueller Sperrbereich S muss nicht notwendigerweise von einem Nutzer mittels Eingabe über eine HMI 200 definiert werden. Der autonome mobile Roboter 100 kann z.B. dazu ausgebildet sein, einen Risikobereich als solchen zu erkennen und darauf basierend einen Sperrbereich S eigenständig zu definieren, um den erkannten Risikobereich zukünftig zu meiden. Risikobereiche sind in erster Linie Bereiche, die die Funktionsweise des Roboters beeinträchtigen oder anderweitig für den Roboter gefährlich sind. Derartige Bereiche kann der Roboter beispielsweise nur durch Befahren mit Hilfe von Sensoren oder durch Analyse der Navigationsfähigkeit erkennen. Dies wird an folgenden, in Fig. 5 dargestellten Beispielen näher erläutert.

Figur 5A zeigt eine Absturzkante (z.B. eine Stufe einer Treppe) als illustratives Beispiel für einen Risikobereich, den der Roboter nur durch Befahren erkennen kann. Typischerweise besitzen Roboter an der Unterseite Bodensensoren 121, um solch eine Absturzkante zu detektieren. Diese sind so am Roboter 100 angeordnet, dass er rechtzeitig vor der Absturzkante stoppen und einen Absturz vermeiden kann. Jedoch kann es immer zu einer Fehlfunktion (z.B. durch eine Verschmutzung der Sensoren) kommen, die dazu führen kann, dass der Roboter 100 die Absturzkante nicht erkennt und folglich über die Absturzkante fahren und abstürzen würde (siehe Fig. 5B).

Um Unfälle wie z.B. in Fig. 5B dargestellt zu vermeiden, kann der Roboter 100 dazu ausgebildet sein, beispielsweise bei einem Einsatz (z.B. Lernfahrt oder erstmalige Durchführung einer Aufgabe, z.B. Reinigung) die Absturzkante auf an sich bekannte Weise zu (z.B. mittels Sensor 121) detektieren und entsprechend auszuweichen, so dass ein Unfall vermieden wird. Eine exemplarische Trajektorie des Roboters ist z.B. in Fig. 5C dargestellt. Hierbei fährt der Roboter 100 teilweise über die Absturzkante, bis die Bodensensoren 121 diese detektieren, wobei die Positionen der Messstellen M ermittelt und gespeichert werden. Anschließend wird auf Basis dieser Messstellen M und optional auch anderen Umgebungs- und Kartendaten, wie beispielsweise der gefahrenen Trajektorie T, eine virtuelle Begrenzung B und/oder ein virtueller Sperrbereich S bestimmt, so dass der Roboter bei Berücksichtigung des Sperrbereichs einen Mindestabstand d (z. B. 1 cm) zu der Position der Absturzkante (insbesondere zu den Messstellen) einhält (vgl. Fig. 5D). Hierdurch kann der Roboter an der Absturzkante entlang reinigen und so navigieren, dass er nicht über die Absturzkante fährt. Insbesondere navigiert er bei Berücksichtigung des virtuellen Sperrbereichs S so, dass die Bodenabsturzsensoren 121 nicht auslösen müssen, wodurch das Risiko eines Absturzes aufgrund einer Fehlfunktion minimiert wird.

Beim Bestimmen der virtuellen Begrenzung B wird berücksichtigt, dass die Position der Messstellen M einer gut erkundeten Absturzkante maximal einen Abstand haben, der kleiner ist als der Roboterdurchmesser (andernfalls, könnte der Roboter zwischen den beiden Messstellen hindurchfahren und einen befahrbaren Bereich erkennen bzw. erneut eine Detektion der Absturzkante erhalten). Die Absturzkante kann ein (nicht-befahrbares) Gebiet vollständig einschließen oder durch Hindernisse (Wände, vgl. Fig. 5C) eingegrenzt sein. Die Positionen der Messstellen M können dementsprechend stückweise verbunden werden. Gegebenenfalls kann die auf diese Weise erhaltene Linie zu einem angrenzenden Hindernis (z.B. hin zu einer Wand) verlängert werden. Die so erhaltene Linie grenzt die durch den Roboter befahrene Fläche von einer nicht befahrbaren Fläche ab. Eine Verschiebung der Linie in Richtung der schon befahrenen Fläche führt zu dem zuvor beschriebenen Ergebnis, d.h. einer virtuellen Begrenzung B. Es sei angemerkt, dass dies nur eine von vielen Möglichkeiten zur Konstruktion einer virtuellen Begrenzung B zur Absicherung einer Absturzkannte ist. Eine weitere Möglichkeit besteht darin, dass jede Messstelle M einen Kreis definiert mit einem Radius, der dem Radius des Roboters zuzüglich Sicherheitsabstand d entspricht. Überlappende Kreise werden zu einem Sperrbereich zusammengefasst. Die zugehörige virtuelle Begrenzung B ergibt sich durch Glätten der Außenkontur (z.B. (paarweise) konvexe Hülle). In diesem Fall kann bei der Navigation der Roboter als Punkt (Mittelpunkt der einer beinahe kreisförmigen Außenkontur des Roboters) angenommen werden.

Ein weiteres Beispiel für eine Situation, in der der Roboter Sperrebereiche eigenständig definieren kann betrifft Hindernisse, die der Roboter nicht oder nur schwer erkennen kann. Beispielsweise nutzt der Roboter einen aktiven Sensor zur Hinderniserkennung und Kartenerstellung, der ein (z. B. optisches) Signal aussendet und dessen Reflektion von einem Hindernis empfängt. Beispielsweise transparente Hindernisse wie eine Glastür, spiegelnde Hindernisse wie ein Spiegel, oder Hindernisse die außerhalb des Bereichs des ausgesandten Signals liegen (z. B. niedrige Hindernisse) können so nicht oder nur schwer erkannt werden. Diese Hindernisse detektiert der Roboter bei Berührung beispielsweise mit einem taktilen Sensor (Sensor, der einen physischen Kontakt zum Hindernis erkennt). Jedoch ist ein zu häufiges und wiederholtes Zusammenstoßen des Roboters mit Hindernissen von Nutzern unerwünscht. Deshalb kann der Roboter dazu ausgebildet sein, während eines Robotereinsatzes (Lernfahrt oder bei der Durchführung einer Aufgabe) die Position von Hindernissen zu bestimmen, die sich nur taktil (mittels Berührung) detektieren lassen, nicht jedoch berührungslos (z.B. mittels optischer Sensoren). Aus diesen Positionen wird (analog zum zuvor beschriebenen Beispiel mit den Absturzkanten) ein virtuelle Sperrfläche S bzw. eine virtuelle Begrenzung B derart erzeugt, dass der Roboter bei Berücksichtigung der virtuellen Sperrfläche einen vorgegebenen Abstand d (z. B. 1 cm) zu dem Hindernis einhält, und dieses nicht mehr berührt. Diese Vorgehensweise ermöglicht es dem Roboter, berührungslos um Hindernisse herum zu reinigen, die er eigentlich nur durch Berührung detektieren kann. Hierdurch wird das Risiko minimiert, dass der Roboter oder das Hindernis durch die Kollision beschädigt wird.

Ein drittes Beispiel für eine Situation, in der der Roboter Sperrebereiche eigenständig definieren kann betrifft Bereiche, in denen der Roboter nur schwer navigieren kann. Dies kann z.B. ein hochfloriger Teppich sein, auf dem sich viele kleine Hindernisse wie z.B. Tisch- und Stuhlbeine befinden. Da das Fahren durch den Teppich stark behindert wird, und gleichzeitig die Tisch- und Stuhlbeine für den Roboter praktisch ein Labyrinth bilden, durch das der Roboter besonders genau navigieren muss, ist diese Situation für den Roboter schwer zu handhaben. So kann es passieren, dass sich der Roboter nicht oder nur nach langer Zeit aus dieser Situation befreien kann. Der Roboter kann diesen problematischen Bereich z.B. durch den erhöhten Schlupf der Räder detektieren und/oder daran, dass er länger als gewöhnlich in diesem Bereich mit sehr vielen Fahrmanövern beschäftigt ist. Zur Effizienzsteigerung kann deshalb dieser Bereich zu einer Sperrfläche gemacht werden, so dass das Risiko minimiert wird, dass der Roboter in nachfolgenden Einsätzen an dieser Stelle hängen bleibt und/oder sehr viel Zeit und Energie verbraucht. Eine Reinigung dieses Bereichs würde beispielsweise nur nach expliziter Anweisung durch den Nutzer geschehen.

Bevor ein automatisch erstellter virtueller Sperrbereich S dauerhaft mit den Kartendaten abgespeichert wird, kann er dem Nutzer angezeigt werden. Dieser kann entscheiden, ob der virtuelle Sperrbereich S wie vorgeschlagen dauerhaft gespeichert wird, oder ob der Roboter in nachfolgenden Einsätzen diesen Bereich (trotz der Warnung) befahren soll.

Die Position des automatisch erzeugten virtuellen Sperrbereichs kann mit Landmarken verknüpft werden, die der Roboter einfach detektieren kann. So kann beispielsweise die virtuelle Begrenzung B in Fig. 5D als Verbindungslinie zwischen den eingrenzenden Wänden gespeichert werden. Hierbei dienen beispielsweise die Kanten als leicht wiedererkennbare Landmarken, bezüglich derer der virtuelle Sperrbereich S gespeichert wird. Das heißt, die Position des Sperrbereichs S oder der Begrenzungslinie B wird relativ zur Position einer detektierbaren Landmarke (z.B. einer Wand) in der Karte gespeichert. Durch die direkte Verknüpfung mit leicht detektierbaren Landmarken kann die Position des virtuellen Sperrbereichs S deutlich genauer und robuster bei der Navigation beachtet werden, als wenn sie nur als Koordinaten der globalen Karte zur Navigation des Roboters bekannt sind.

*Durch andere Geräte definierte Sperrbereiche* - Wenn ein erster autonomer mobiler Roboter 100 einen virtuellen Sperrbereich S erstellt, kann es sinnvoll sein, dass dieser an einen oder mehrere andere Roboter weitergegeben wird. Analog kann der Roboter 100 virtuelle Sperrbereiche S von einem externen Gerät 300, insbesondere von einem zweiten autonomen mobilen Roboter 100B entgegen nehmen. Diese Situation ist in Fig. 6 exemplarisch dargestellt. Dabei ist es möglich, dass der erste Roboter 100 einen virtuellen Sperrbereich S erstellt, der (z.B. ausschließlich) von einem oder mehreren anderen Robotern (z.B. dem zweiten 100B) berücksichtigt wird, aber nicht von dem ersten Roboter 100, der den virtuellen Sperrbereich S erstellt hat. Zum Austausch von Informationen über den virtuellen Sperrbereich S nutzen die beteiligten Geräte (erster und zweiter Roboter 100 und 100B) eine Kommunikationsverbindung, welche über die Kommunikationseinheit 140 aufgebaut werden kann (siehe Fig. 1B).

Der zweite Roboter 100B kann ebenfalls über Kartendaten verfügen, die das Robotereinsatzgebiet repräsentieren. Diese können dieselben Daten sein, die auch der erste Roboter 100 nutzt oder Daten, die der zweite Roboter 100B aufgenommen, aktualisiert und/oder interpretiert hat. Wenn die Roboter 100, 100B verschiedene Datenquellen nutzen, so können die Koordinaten für die Positionsangaben bezüglich den Kartendaten des ersten Roboters 100 in Koordinaten für die Positionsangaben bezüglich der Kartendaten des zweiten Roboters 100B (und umgekehrt) umgerechnet werden. Diese Umrechnung kann automatisch in einem der Roboter 100, 100B geschehen oder auf einem externen Rechengerät wie einem PC oder einem Cloud-Server. Die Parameter der (Koordinaten-) Transformation können beispielsweise mittels der Methode der kleinsten Quadrate (Least-Squares-Fit) basierend auf vorhanden Navigationsfeatures wie der Position von Wänden automatisch ermittelt werden. Im einfachsten Fall besteht die (Koordinaten-) Transformation für eine zweidimensionale Karte aus drei Parametern, die eine Verschiebung (zwei Parameter) und eine Rotation (ein Parameter) beschreiben. Komplexere Transformationen sind denkbar, um beispielsweise (systematische) Messfehler von Sensoren oder dreidimensionale Karten zu erfassen. Beispielsweise kann ein Sensor zur Abstandsmessung des ersten Roboters systematisch Abstände kleiner messen als ein Abstandssensor des zweiten Roboters. Dies kann mit einem zusätzlichen Skalierungsparameter ausgeglichen werden. In einem weiteren Beispiel kann die in beiden Karten gespeicherte Pose (Position inkl. Orientierung) einer Basisstation (oder eines anderen Navigationsfeatures) verwendet werden, um die Koordinatentransformation zu berechnen. Angenommen die in der Karte des ersten Roboters gespeicherte Pose weicht (wenn auch geringfügig) von der in der Karte des zweiten Roboters gespeicherten Pose ab. Da es sich aber in beiden Karten um dieselbe reale Basisstation (dasselbe reale Navigationsfeature) handelt, kann aus den beiden Posen eine Transformationsoperation (z.B. Verschiebung plus Drehung) hergeleitet werden.

In einem exemplarischen Verfahren, bei dem Informationen zwischen zumindest zwei autonomen mobilen Robotern, 100 und 100B, ausgetauscht werden, sind beide Roboter 100 und 100B dazu ausgebildet, unter Verwendung von Sensoren und einer elektronischen Karte eigenständig autonom in einem Robotereinsatzgebiet zu navigieren, die Karte selbsttätig aufzubauen und zu aktualisieren. Beide Roboter 100 und 100B verfügen über ein Kommunikationsmodul (siehe Fig. 1B, Kommunikationseinheit 140), mit dem sie direkt oder indirekt über ein externes Gerät (z.B. ein Server) Informationen an den jeweils anderen Roboter senden können. Gemäß dem vorliegendem Beispiel wird eine Transformationsoperation von Koordinaten einer ersten Karte des ersten Roboters 100 in Koordinaten einer zweiten Karte des zweiten Roboters 100B automatisch ermittelt. Dies kann in einem der beiden Roboter oder in dem externen Gerät (z.B. dem Server) geschehen. Positionsbezogene Informationen (Kartendaten) werden von einem der Roboter (z.B. Roboter 100) an den jeweils anderen Roboter (z.B. Roboter 100B) gesendet. Vor dem Senden (im Roboter 100) oder nach dem Senden (im Roboter 100B) oder während des Sendens (im externen Gerät, über das die Informationsübermittlung erfolgt) werden die Koordinaten der positionsbezogenen Information von Koordinaten der ersten Karte in Koordinaten der zweiten Karte durch Anwendung der Transformationsoperation transformiert.

Neben den zuvor beschriebenen nutzerdefinierten virtuellen Sperrbereichen S und den basierend auf einer Funktionsbeeinträchtigung und/oder einem (vom ersten Roboter 100 erkannten) Gefahrenbereich automatisch erzeugten virtuellen Sperrbereichen S, können bei der Roboterinteraktion auch auf einem Arbeitseinsatz (Robotereinsatz zur Durchführung einer Aufgabe) basierende virtuelle Sperrbereiche S genutzt werden.

Beispielsweise kann ein Nutzer eine Flüssigkeit wie z.B. Milch verschüttet haben und einen Wischroboter damit beauftragen, die Pfütze zu beseitigen. In dem in Fig. 6 dargestellten Beispiel ist der erste Roboter 100 als Wischroboter ausgebildet, dessen Arbeitsmodul dazu ausgebildet ist, den Boden feucht zu wischen. Während der erste Roboter mit dem Wischen beschäftigt ist, soll kein anderer Roboter (wie z.B. Roboter 100B) durch die Pfütze fahren und dadurch die Flüssigkeit verteilen. Des Weiteren soll kein anderer Roboter durch den frisch gewischten (und daher noch feuchten) Bereich fahren. Der erste Roboter 100 würde basierend auf der Nutzereingabe und gegebenenfalls weiterer Sensormessungen den zu reinigenden Bereich bestimmen. Anderen Robotern des Haushalts kann er mitteilen, dass dieser zu reinigende Bereich (z.B. vorübergehend) als virtueller Sperrbereich S zu handhaben ist.

Nachdem der Wischroboter 100 seine Tätigkeit abgeschlossen hat, kann an die anderen Roboter 100B eine Nachricht gesandt werde, mittels der der virtuellen Sperrbereich S wieder freigegeben wird. Alternativ oder zusätzlich kann der virtuelle Sperrbereich S auch eine automatische Ablaufzeit besitzen. So kann ein Wischroboter 100 beispielsweise einen frisch gewischten und somit noch feuchten Bereich W für andere Roboter für eine vorgegebene Zeit als Sperrbereich S definieren und somit sperren (siehe Fig. 6). Nach Ablauf dieser Zeit, können die anderen Roboter 100B den virtuellen Sperrbereich S automatisch löschen.

*Aktivierung*/*Deaktivierung von Sperrbereichen* - Es kann sein, dass ein Nutzer nicht zu allen Zeiten die Berücksichtigung eines virtuellen Sperrbereichs S durch den Roboter 100 wünscht. Gleichzeitig kann es sein, dass der Nutzer diesen nicht ständig löschen und neu anlegen möchte. Deshalb kann es nützlich sein, Kriterien festzulegen und anhand dieser zu entscheiden, ob ein virtueller Sperrbereich S beim Navigieren des autonomen mobilen Roboters 100 berücksichtigt wird oder nicht. Das heißt, der Roboter kann anhand von bestimmten Kriterien entscheiden, ob er den virtuellen Sperrbereich S eigenständig befährt bzw. durchfährt oder nicht.

Beispielsweise kann ein virtueller Sperrbereich S immer vom Roboter 100 berücksichtigt werden, es sei denn der Nutzer gibt (z.B. mittels der HMI 200) den Sperrbereich S explizit für eine Aufgabe oder eine vorgebbare Zeit frei. Beispielsweise ist der virtuelle Sperrbereich S ein als Spielecke genutzter Teil der Wohnung, in dem häufig kleine Gegenstände in Form von Spielzeug herumliegen, welche den Roboter 100 beim autonomen Fahren oder bei einer selbstständigen Tätigkeit wie einer Bodenreinigung beeinträchtigen. Ein Nutzer kann diese Spielecke gelegentlich aufräumen und anschließend wünschen, dass diese sofort oder beim nächsten Arbeitseinsatz mitgereinigt wird. So kann der Nutzer beispielsweise dem Roboter 100 über die HMI 200 mitteilen, dass der virtuelle Sperrbereich S sofort gereinigt werden soll. Der Roboter wird dann für diesen Arbeitseinsatz den virtuellen Sperrbereich S befahren und reinigen. Die virtuelle Begrenzung B kann beispielsweise als Grenze des zu reinigenden Gebiets genutzt werden. Bei späteren Arbeitseinsätzen wird der Sperrbereich S wieder beachtet.

Alternativ oder zusätzlich kann der Nutzer dem Roboter mitteilen, dass beim nächsten Arbeitseinsatz (insbesondere Reinigung der Wohnung) der virtuelle Sperrbereich S inaktiv ist. Der Roboter kann beispielsweise so fahren, als ob der virtuelle Sperrbereich S nicht gespeichert wäre und so diesen automatisch mit reinigen. Alternativ kann der Roboter den virtuellen Sperrbereich als eigenes zu reinigendes Teilgebiet entsprechend der virtuellen Begrenzung B interpretieren und separat bearbeiten. Hierbei kann der virtuelle Sperrbereich beispielsweise mit erhöhter Priorität angefahren werden. Alternativ kann der virtuelle Sperrbereich auch als letztes Teilgebiet des Arbeitseinsatzes angefahren werden, da damit gerechnet werden muss, dass an dieser Stelle unerwartete Probleme auftreten können, und so der Arbeitseinsatz des Roboters unterbrochen wird.

Alternativ oder zusätzlich kann der Nutzer dem Roboter mitteilen, dass der virtuelle Sperrbereich S für eine vorgebbare Zeit inaktiv ist. Beispielsweise gibt es Situationen, in denen Kinder, die häufig in einer Spielecke eines Kinderzimmers spielen, für einige Stunden oder Tage abwesend sind. Während dieser Zeit kann nun der Roboter die als virtuellen Sperrbereich S markierte Spielecke mit in seiner autonomen Arbeitsplanung berücksichtigen. Nach Ablauf der vom Nutzer festgelegten Zeit kann der virtuelle Sperrbereich S automatisch wieder aktiv werden, und wird somit durch den Roboter berücksichtigt werden.

In einem weiteren Beispiel wird die Aktivierung/Deaktivierung eines virtuellen Sperrbereichs S über eine Kalenderfunktion automatisch gesteuert. Beispielsweise will ein Nutzer nicht, dass der Roboter nachts durch das Schlafzimmer gesteuert wird. Jedoch soll tagsüber der Roboter das Schlafzimmer beispielsweise sauber machen. In diesem Fall sind beispielsweise in einem Kalender die Uhrzeiten verzeichnet, zu denen der virtuelle Sperrbereich S aktiv ist und somit vom autonomen mobilen Roboter 100 dahingehend berücksichtigt wird, dass der virtuelle Sperrbereich S nicht selbsttätig befahren und/oder überfahren wird. Beispielsweise kann so das Schlafzimmer über Nacht in der Zeit von 21:00 Uhr bis 9:00 Uhr für den Roboter gesperrt werden.

Eine Kalendersteuerung bietet zwar einen gewissen Nutzerkomfort durch Automatisierung, ist hierbei jedoch unflexibel. Das Ziel der Sperrung des Schlafzimmers im vorhergehenden Beispiel ist, eine Störung des schlafenden Nutzers zu vermeiden. Deshalb ist es vorteilhaft, die Aktivität des Sperrbereichs direkt mit der Aktivität des Nutzers zu verknüpfen. Speziell im Beispiel des schlafenden Nutzers soll der Roboter jedoch nach Möglichkeit nicht in das Schlafzimmer fahren, um zu prüfen, ob der Nutzer (noch) schläft. Deshalb wird basierend auf anderen Geräten 300 wie Gebrauchsgegenständen, Sensoren und/oder anderen Robotern bestimmt, ob ein virtueller Sperrbereich S berücksichtigt wird (aktiv ist) oder nicht (z.B. ob der Roboter in das Schlafzimmer fahren darf). So kann beispielsweise mit Hilfe der Aktivität von Schlaftrackern *(sleep tracker),* Bettsensoren, oder einem Schlafmodus eines Activity-Tracker, Fitness-Tracker einer Smartwatch oder anderer Wearables bestimmt werden, ob der Nutzer gerade schläft. Alternativ kann die Aktivität einer elektrischen Zahnbürste genutzt werden. So kann beispielsweise der virtuelle Sperrbereich aktiviert werden, wenn die elektrische Zahnbürste abends benutzt wird, und der virtuelle Sperrbereich deaktiviert werden, wenn die elektrische Zahnbürste am Morgen benutzt wird. Zahlreiche andere Szenarien, in denen die Aktivität eines virtuellen Sperrbereichs S basierend auf einem Zustand und/oder Informationen eines externen Geräts 300 bestimmt wird, sind denkbar.

Des Weiteren kann die Aktivierung/Deaktivierung eines virtuellen Sperrbereichs S von dem Zustand und/oder der Aktivität des Roboters abhängen. Beispielsweise kann der Roboter über verschiedene Reinigungmodule verfügen, die für verschiedene Trockenund/oder Nassreinigungen geeignet sind. In diesem Fall kann die Aktivität eines Sperrbereichs von dem genutzten Reinigungsmodul abhängen. So kann beispielsweise ein Teppich oder eine andere wasserempfindliche Bodenfläche, als virtueller Sperrbereich S behandelt werden, wenn ein Nassreinigungsmodul aktiv ist. Ein anderes Beispiel für die Aktivierung/Deaktivierung eines virtuellen Sperrbereichs S abhängig vom Zustand und/oder der Aktivität des Roboters betrifft einen Transportroboter zur Unterstützung im Haushalt. So kann der Roboter beispielsweise Getränke in einem offenen Glas transportieren. In diesem Fall soll der Roboter Bodenunebenheiten wie z.B. eine Teppichkante vermeiden. Um dies zu erreichen, kann der Teppich als Sperrbereich definiert werden, der so lange aktiv ist, wie der Roboter das Getränk transportiert.

Während der autonome mobile Roboter eine Tätigkeit insbesondere in einem virtuellen Sperrbereich S verrichtet, können sich die Entscheidungsgrundlagen, ob der virtueller Sperrbereich S beim Navigieren des autonomen mobilen Roboters 100 berücksichtigt wird, ändern. Das heißt die Prüfung, ob ein Sperrbereich berücksichtigt werden soll, kann - auch während eines Arbeitseinsatzes oder der Planung eines Arbeitseinsatzes - fortlaufend oder zumindest in regelmäßigen Abständen geschehen. Wenn der Roboter bei einer solchen Überprüfung feststellt, dass ein zu berücksichtigender Sperrbereich hinzugekommen ist, kann es passieren, dass die aktuelle Position des Roboters 100 sich innerhalb des virtuellen Sperrbereichs S befindet. In diesem Fall kann der Roboter beispielsweise stehen bleiben und auf eine Anweisung des Nutzers warten. Alternativ kann der Roboter aus dem Bereich heraus steuern. Alternativ kann der Roboter seine aktuelle Aufgabe in dem Bereich ganz oder zumindest teilweise beenden, bevor der virtuelle Sperrbereich aktiv wird. Hierzu kann beispielsweise die Zeit bestimmt werden, die für die Beendigung der Aufgabe benötigt wird. Wenn diese Zeit kleiner als ein vorgebbarer Maximalwert ist, so wird die Aufgabe beendet und die Aktivierung des Sperrbereichs um diese Zeit verzögert.

*Roboter im Sperrbereich* -Üblicherweise wird ein (virtueller) Sperrbereich S vom Roboter zuverlässig gemieden, beispielsweise indem er bei der Navigation wie ein reales Hindernis berücksichtigt wird. Diese Vorgehensweise kann funktionieren, solange der autonome mobile Roboter 100 seine Position in der Karte mit hinreichender Genauigkeit kennt. Jedoch kann der Roboter in einen virtuellen Sperrbereich S hinein geraten, wenn beispielsweise der Nutzer ein Teilgebiet definiert und dieses als Sperrbereich ausweist, während der Roboter sich in diesem Teilgebiet befindet. Ein anderes Problem kann deshalb auftreten, weil dem Roboter 100 die eigene Position nicht immer genau bekannt ist. Folglich kann es passieren, dass der Roboter (ohne es zu "wissen") unbemerkt eine virtuelle Begrenzung überfährt. In diesem Fall könnte sich der Roboter in Sperrbereich hinein bewegen und dabei Schäden verursachen. Es sei angemerkt, dass der Roboter auch beim Versuch einer kollisionsfreien Navigation mit Hindernissen kollidieren kann. Jedoch kann der Roboter aufgrund der Kollision den Navigationsfehler bemerken und seine Navigationsstrategie entsprechend anpassen. Bei einem virtuellen Sperrbereich fehlt die sofortige Rückmeldung (durch die physische Kollision). Es sind somit zusätzliche Maßnahmen notwendig, um das Verhalten des Roboters robust gegen derartige Fehler im Umgang mit virtuellen Sperrbereichen zu machen. Diese werden beispielhaft im Folgenden erläutert.

Eine Möglichkeit des robusten Umgangs mit virtuellen Sperrbereichen S besteht darin, die virtuelle Begrenzung B so zu handhaben, dass ein Überfahren nur in eine Richtung unterbunden wird (wie zuvor beschrieben). Das hat zur Folge, dass der Roboter 100 einen virtuellen Sperrbereich immer verlassen kann, während ein hineinfahren in den Sperrbereich vermieden wird. In anderen Worten, virtuelle Begrenzungen B, die in der Karte des Roboters eingezeichnet sind, wirken nur in eine Richtung; eine virtuelle Begrenzung kann in einer Richtung überfahren werden, in der anderen Richtung jedoch nicht.

Alternativ oder zusätzlich kann geprüft werden, ob der Roboter sich ganz oder nur teilweise innerhalb eines Sperrbereichs S befindet. Abhängig von dieser Prüfung kann entschieden werden, ob der Roboter den Sperrbereich S verlässt oder stehen bleibt. Beispielsweise kann der Sperrbereich in einen Randbereich und einen Kernbereich unterteilt werden. Wenn der Roboter sich zumindest teilweise in dem Kernbereich befindet, wird der Roboter gestoppt. Befindet der Roboter sich lediglich im Randbereich des Sperrbereichs S, versucht der Roboter aus dem Sperrbereich S heraus zu navigieren. Dieses Merkmal des Sperrbereichs S (Unterteilung in Rand- und Kernbereich) wird - metaphorisch - auch als "Softwall" bezeichnet. Das heißt, der Sperrbereich wirkt sich bei der Navigation des Roboters nicht wie eine "harte" Wand aus, sondern es gibt einen "weichen" Übergangsbereich, in den der Roboter hineinfahren kann, dann aber versucht, den Randbereich möglichst wieder zu verlassen. Beispielsweise kann eine Nachricht an die Mensch-Maschine-Schnittstelle 200 gesandt werden, um den Nutzer über das Problem zu informieren, und um eine Anweisung durch den Nutzer zu bitten.

Die Prüfung kann fortlaufen während der Navigation erfolgen, z.B. immer, wenn die Roboterposition neu bestimmt wurde. Zudem kann die Prüfung erfolgen, wenn ein neuer virtueller Sperrbereich S beispielsweise durch den Nutzer oder ein anderes Gerät definiert und/oder aktiviert wird. Wenn sich der Roboter in einem neu zu erzeugenden virtuellen Sperrbereich S befindet, so kann ein Abspeichern verweigert werden, bis der Sperrbereich S beispielsweise von einem Nutzer bestätigt wird. Ergänzend oder alternativ kann der Roboter automatisch aus dem Sperrbereich S gesteuert werden. Ergänzend oder alternativ kann das den Sperrbereich S erzeugende Gerät (bzw. der Nutzer) darüber informiert werden, dass sich der Roboter in dem neu zu erzeugenden Sperrbereich S befindet. Zudem kann eine Nachfrage an das den Sperrbereich S erzeugende Gerät (z.B. HMI 200) bzw. den Nutzer gesandt werden, ob und wie der Roboter den neu zu erzeugenden Sperrbereich S verlassen kann. Beispielsweise kann der Nutzer eine bevorzugte Richtung angeben, in die der Roboter den Sperrbereich verlassen soll. Alternativ kann der Nutzer den Roboter stoppen, um ihn per Hand aus dem Sperrbereich zu tragen.

Bei einem schon vorhandenen aber inaktivem Sperrbereich S, können mit dem Sperrbereich S verknüpfte Handlungsinformationen abgespeichert werden. So kann beispielsweise ein Schlafzimmer als Sperrbereich S definiert sein, welcher aktiv wird, wenn der Nutzer schlafen geht. In diesem Fall kann der Roboter nach Aktivierung des Sperrbereichs S diesen selbsttätig verlassen. In anderen Fällen kann es gewünscht sein, dass der Roboter stehen bleibt, bis der Sperrbereich wieder inaktiv wird oder ein Nutzer eingreift.

Ein Einsatzszenario eines autonomen mobilen Roboters 100 kann auch umfassen, dass er von einem Nutzer manuell versetzt wird, was normalerweise zur Folge hat, dass der Roboter die Information über seine eigene Position in der elektronischen Karte verliert. Anschließend kann der Roboter mittels einer globalen Selbstlokalisierung erneut seine Position bestimmen. Hierzu bewegt sich der Roboter 100 in seiner Umgebung, um mit Hilfe seiner Sensoren Daten über die Umgebung zu sammeln, und um diese mit den vorhandenen Kartendaten zu vergleichen. Da der Roboter während der globalen Selbstlokalisierung keine oder nur geringe Information über seine tatsächliche Position bezüglich der Kartendaten besitzt, kann es passieren, dass er dabei unbeabsichtigt in einen Sperrbereich S hineinfährt. Deshalb ist es wichtig, dass der Roboter nach einer globalen Selbstlokalisierung anhand gespeicherter Kartendaten prüft, ob er sich in einem virtuellen Sperrbereich S befindet.

Während einer Selbstlokalisierung kann der Roboter auf Basis von Lokalisierungshypothesen (also auf den Sensor- und Kartendaten basierende Hypothesen, an welcher Position sich der Roboter befinden kann, beispielsweise mit einem Wahrscheinlichkeitsmodell bestimmt) prüfen, ob er sich in oder in der Nähe eines virtuellen Sperrbereichs S befindet. Basierend auf dieser Information, kann der Roboter seine Erkundungsfahrt zur globalen Selbstlokalisierung anpassen, um das Risiko (d.h. die Wahrscheinlichkeit) zu reduzieren, einen virtuellen Sperrbereich unbeabsichtigt zu befahren. Auf Wahrscheinlichkeiten basierende Lokalisierungshypothesen zur (globalen) Selbstlokalisation des Roboters in einer Karte sind an sich bekannt und werden daher nicht weiter erläutert. Relevant für dieses Bespiel ist, dass der Roboter, wenn er während einer Erkundungsfahrt zur Selbstlokalisierung seine eigene Position nicht genau kennt, nur Wahrscheinlichkeiten für bestimmte Kartenpositionen ermitteln kann. Dabei kann der Roboter auch prüfen, mit welcher Wahrscheinlichkeit er sich in einem Sperrbereich befindet. Abhängig von dieser Wahrscheinlichkeit kann der Roboter seinen aktuellen Pfad anpassen. Nimmt beispielsweise die Wahrscheinlichkeit, dass sich der Roboter in einem Sperrbereich S befindet zu, während der Roboter sich entlang eines bestimmten Pfades bewegt, so kann er die Fahrtrichtung ändern, bis die Wahrscheinlichkeit wieder abnimmt.

Zusätzlich zu der Prüfung, ob der Roboter 100 sich in einem Sperrbereich S befindet, kann der Weg des Roboters 100 während der globalen Selbstlokalisierung aufgezeichnet werden. Dieser aufgezeichnete Weg kann genutzt werden, um aus dem Sperrbereich heraus zu fahren. Beispielsweise kann der Roboter den aufgezeichneten Weg so weit zurück fahren, bis er den Sperrbereich verlassen hat oder sicher verlassen kann.

Ein Nutzer kann den Roboter beim Versetzen absichtlich oder versehentlich in einem virtuellen Sperrbereich S platzieren, da er beispielsweise will, dass dieser Bereich (ausnahmsweise) gereinigt wird. Ausgehend von der Position, an der der Nutzer den Roboter abgesetzt hat, startet der Roboter (wie zuvor beschrieben) eine globale Selbstlokalisierung. Auf Basis des während der Durchführung der globalen Selbstlokalisierung zurückgelegten und aufgezeichneten Wegs kann die Startposition des Roboters bestimmt werden, und so ermittelt werden, ob der Nutzer den Roboter 100 in einem virtuellen Sperrbereich S gestartet hat. Danach kann der Roboter eine vom Nutzer festgelegte Aufgabe in dem virtuellen Sperrbereich S ausüben. Zusätzlich kann der Roboter eine entsprechende Information (z. B. Warnmeldung) an den Nutzer über die HMI 200 senden.

Um zu entscheiden, ob und wie der Roboter aus dem Sperrbereich heraus navigiert, gibt es verschieden Ansätze, die einzeln oder in Kombination verwendet werden können. In Fig. 7A und B ist der virtuelle Sperrbereich S in einen ersten Teilbereich Sa und einen zweiten Teilbereich Sb aufgeteilt. Wenn sich der Roboter im ersten Teilbereich Sa befindet, so bleibt er stehen (Not-Stopp). Wenn sich der Roboter im zweiten Teilbereich Sb befindet, so steuert er über die virtuelle Begrenzung B aus dem Sperrbereich heraus. Die Aufteilung des virtuellen Sperrbereichs S erfolgt beispielsweise so, dass ausgehend von der virtuellen Begrenzung B alles in einem Abstand d (z. B. Breite des Roboters) zum zweiten Teilbereich Sb gehört. In anderen Worten, der Roboter führt einen Not-Stopp aus, wenn er sich weiter als eine vorgebbare Strecke von der Begrenzung B weg befindet und fährt eigenständig aus dem Sperrbereich S heraus, wenn er näher an der Begrenzung B ist. Die Aufteilung des virtuellen Sperrbereichs S kann beispielsweise basierend auf einer Nutzereingabe geschehen. Diese kann enthalten, wie wichtig die Einhaltung des Sperrbereichs ist. Wenn die Einhaltung des Sperrbereichs sehr wichtig ist, kann die Breite d des zweiten Teilbereich Sb sehr schmal gewählt werden (z. B. 1 cm), oder ganz auf diesen verzichtet werden.

Ein weiterer Ansatz, gemäß dem der Roboter aus einem Sperrbereich herausnavigiert, basiert auf einer virtuellen Kraftfeldanalyse *(virtual force-field (VFF) analysis).* Die Kraftfeldanalyse ist eine (an sich bekannte) Methode, den Roboter reaktiv ohne Planungsaufwand (d.h. ohne Vorausplanung einer Roboterbahn) zu steuern. Hierzu wird basierend auf den Sensormessungen und dem Ziel des Roboters ein virtuelles Kraftfeld bestimmt (berechnet), welches auf den Roboter "einwirkt". Die Begriffe Kraft bzw. Kraftfeld sind in diesem Zusammenhang metaphorisch zu verstehen. Es sind also keine physischen Kräfte, die auf den Roboter einwirken, sondern virtuelle. Die Steuereinheit 150 (siehe Fig. 1B) des Roboters ist aber dazu ausgebildet, diese virtuellen Kräfte zu berechnen, und der Roboter kann dann auf diese Kräfte reagieren (z.B. in Richtung der auf den Roboter wirkenden virtuellen Kraft zurückweichen). Wie bei physikalischen Kraftfeldern können die virtuellen Kraftfelder von verschiedenen Quellen (Hindernisse, Ziel des Roboters) addiert werden. Basierend auf der Richtung und dem Betrag der resultierenden virtuellen Kraft an der aktuellen Position und Orientierung des Roboters werden die Steuerkommandos für die Antriebseinheit erstellt. Die Steuerung des Roboters reagiert also direkt auf die Sensormessungen und es fällt kein zusätzlicher Planungsaufwand an. Diese Kraftfeldanalyse kann z.B. verwendet werden, um (im Falle einer Softwall) den Roboter aus dem Randbereich eines Sperrbereichs S effizient heraus zu navigieren.

Wie in Fig. 7C beispielhaft dargestellt, kann in einem virtuellen Sperrbereich S ein virtuelles Kraftfeld (schematisch dargestellt durch die Kraftvektoren V) berücksichtigt werden, das beispielsweise immer auf den nächsten Punkt einer virtuellen Begrenzungslinie B zeigt. Dieser Ansatz ist insbesondere geeignet, um den Roboter schnell aus einem Sperrbereich S heraus zusteuern, wenn er während der Navigation beispielsweise aufgrund einer ungenau bekannten Roboterposition in diesen hinein geraten ist. Zudem kann das Kraftfeld so groß gewählt werden, dass der Roboter bei exakt bekannter Position den virtuellen Sperrbereich nicht befährt. Beispielsweise wird es wie bei realen Hindernissen gewählt, so dass eine Kollision mit dem Hindernis weitgehend vermieden wird.

Ein weiterer Ansatz basiert auf den Kosten, den ein geplanter Pfad des Roboters verursacht, wobei der Pfad geringster Kosten zur Steuerung des Roboters gewählt wird. Wenn beispielsweise eine Bewegung des Roboters innerhalb eines Sperrbereichs S einen konstanten Betrag je zurückgelegter Strecke "kostet" und eine Bewegung außerhalb des Sperrbereichs S keine Kosten verursacht, so führt dies dazu, dass bei einer Minimierung der Kosten der kürzeste Weg aus dem Sperrbereich S gewählt wird. Der Roboter wird also den kürzesten Weg aus dem Sperrbereich heraus wählen, um die "Kosten" minimal zu halten. Der Begriff "Kosten" ist in diesem Zusammenhang auch metaphorisch zu verstehen und könnte auch als Gewichtungsfaktor bezeichnet werden.

Figur 7D illustriert exemplarisch den Verlauf einer Kostenfunktion für einen Weg, der in einen virtuellen Sperrbereich S hineinführt. Für den Weg außerhalb des Sperrbereichs S fallen keine Kosten an. Für das Überfahren der virtuellen Begrenzung B können Grundkosten CO entstehen. Danach steigen die Kosten proportional zur zurückgelegten Strecke an. Natürlich können auch andere Kostenfunktionen genutzt werden. Wenn es keinen planbaren Weg gibt, dessen Kosten einen vorher bestimmten Maximalwert Cm unterschreiten, kann der Roboter gestoppt werden und beispielsweise in einen Not-Stopp-Status versetzt werden. Hierdurch wird implizit die zuvor beschriebene Zweiteilung des virtuellen Sperrbereichs S erreicht.

Es sei angemerkt, dass sich mit den oben beschriebenen Ansätzen die virtuelle Begrenzung B wie eine weiche Wand *(Soft Wall)* verhalten kann. Eine weiche Wand zeichnet sich dadurch aus, dass ihre Grenze nicht fest ist, sondern ähnlich einem Gummiband nachgiebig. Dagegen würde eine harte Wand wie ein reales Hindernis ein Überfahren nicht ermöglichen (da bei dem realen Hindernis eine Kollision erfolgen würde) und auch nicht vorsehen; der Roboter würde also sofort stehen bleiben. Im Hinblick auf den erwähnten kostenbasierten Ansatz bedeutet dies beispielsweise, wenn die Kosten eines geplanten Wegs unter Verletzung der virtuellen Begrenzung B niedriger sind als die Kosten aller anderen möglichen Bewegungen des Roboters, so kann die virtuelle Begrenzung B und somit die Sperrfläche (teilweise) befahren werden. Wenn beispielsweise die Grundkosten CO der Befahrung des virtuellen Sperrbereichs S so groß oder größer als der Maximalwert Cm gewählt werden, so ist ein geplantes Befahren des Sperrbereichs nicht erlaubt. Wenn, wie in Fig. 7D gezeigt, die Grundkosten CO der Befahrung des virtuellen Sperrbereichs S kleiner als der Maximalwert Cm gewählt werden, so ist ein geplantes Befahren des Sperrbereichs möglich. Dies kann beispielsweise notwendig sein, wenn sich der Roboter zwischen Hindernissen fest gefahren hat, oder zwischen einem Hindernis und der virtuellen Begrenzung B nur wenig Platz ist, um einen hinter dem Hindernis liegenden Bereich zu erreichen. Bei einer "harten" virtuellen Wand ist jede Bewegung innerhalb des virtuellen Sperrbereichs S mit maximalen Kosten belegt, wodurch keine Bewegung in dem hinter der harten virtuellen Wand liegenden Sperrbereich möglich ist.

In einer weiteren Ausgestaltung der Erfindung bleibt der Roboter 100 stehen, nachdem die Prüfung ergeben hat, dass der Roboter 100 sich in einer virtuellen Sperrfläche S befindet. Der Nutzer wird über diesen Fehler informiert, und es wird ihm die Entscheidung übertragen, ob der Roboter an dieser Stelle stehen bleiben soll, bis ein Nutzer ihn an eine andere Stelle versetzen kann, oder ob der Roboter den Sperrbereich S verlassen soll. Der Nutzer kann einen Weg aus dem Sperrbereich S weisen oder vorschlagen (z.B. mittels der HMI 200). So kann der Nutzer den Roboter direkt (fern-)steuern oder beispielsweise Wegpunkte oder eine grobe Richtung angeben, auf deren Basis der Roboter automatisch aus dem virtuellen Sperrbereich S herausgesteuert wird. Beispielsweise kann er die virtuelle Begrenzung B, über die der Roboter zum Verlassen des Sperrbereichs S gesteuert werden soll, festlegen. Das kann sinnvoll sein, wenn ein Bereich über verschiedene virtuelle Begrenzungen verlassen werden kann. Dem Nutzer kann hierfür beispielsweise eine aktuelle Karte angezeigt werden. Zusätzlich kann beispielsweise der Roboter eine Kamera besitzen, deren Bilder an die Mensch-Maschine-Schnittstelle 200 gesandt werden, so dass der Nutzer basierend auf diesen Bildern einen sicheren Pfad aus dem virtuellen Sperrbereich weisen kann.

*Hilferuf des Roboters* - Wenn der Roboter in einem virtuellen Sperrbereich S unbeabsichtigt hineingeraten ist und keine der zuvor beschriebenen Möglichkeiten besteht, den Sperrbereich S zu verlassen, so bleibt er stehen (Not-Stopp) und wartet auf einen Nutzereingriff, um ein für den Nutzer unerwünschtes Verhalten zu vermeiden. Das gleiche gilt für Situationen, in denen der Roboter sich nicht selbsttätig befreien, oder in denen der Roboter sich nicht mehr bewegen kann. Beispielsweise kann der Roboter von einem Nutzer unbeabsichtigt in einem Raum (durch Schließen einer Zimmertür, während der Roboter eine Aufgabe verrichtet) eingesperrt werden, wodurch der Roboter nicht mehr eigenständig nach Verrichtung der Aufgabe zu seiner Basisstation zurückkehren kann. Weitere Beispiele sind, dass der Roboter sich in am Boden liegenden Kabeln verheddert hat, einer der Aktoren des Roboters wie eine rotierende Bürste blockiert ist, wenn der Roboter zwischen zwei Hindernissen stecken geblieben ist, wenn bei einer weiteren Bewegung ein Absturz über eine Kante droht, wenn für die Funktion des Roboters relevante Sensoren beispielsweise durch Verschmutzung keine Daten oder nur eingeschränkt Daten liefern oder bei anderweitig sicherheitskritischen Situationen.

Es ist üblich, den Status des Roboters in einen speziellen Modus zu setzen wie "Not-Stopp", um ihn von einer normalen Pause oder Stopp eines Arbeitsvorgangs zu unterscheiden, der von einem Nutzer gewünscht sein kann. Der interne Roboterstatus "Not-Stopp" bedeutet, dass alle Aktoren (insbesondere der Arbeitseinheit 160 und der Antriebseinheit 170) gestoppt werden und erst durch ein (z.B. manuelles) Eingreifen eines Nutzers erneut aktivierbar sind. Ein Eingreifen eines Nutzers ist hierbei beispielsweise das Senden eines Kommandos (z.B. mittels der HMI 200), wie der Roboter sich aus der Situation befreien soll. In einigen Fällen kann ein manuelles Eingreifen des Nutzers erforderlich sein wie beispielsweise, dass ein Sensor gereinigt oder ein blockierter Aktor befreit wird.

Eine HMI 200 (oder ein anderes externes Gerät 300) kann den Status des Roboters über die Kommunikationseinheit 140 abfragen, wodurch der Nutzer über das Problem informiert werden kann. Zudem kann der Roboter während des Status "Not-Stopp" ein akustisches und/oder optisches (Not-)Signal aussenden, damit der Nutzer den Roboter leichter finden kann, um ihn zu befreien.

Dabei kann jedoch das Problem auftreten, dass der autonome mobile Roboter 100 fortwährend ein Signal aussendet, wodurch die Batterie schnell zur Neige geht, während der Nutzer nicht zuhause ist. Bei Ankunft des Nutzers kann die Batterie soweit entleert sein, dass der Roboter sich abgeschaltet hat und entsprechend kein Signal mehr aussenden kann. Zudem können Nachbarn durch das fortwährende akustische Signal gestört werden. Ein Nutzer kann zu Hause sein, jedoch keine Zeit haben, sich des Problems des Roboters anzunehmen. Auch in diesem Fall würde ein laufend ausgesandtes Signal stören.

Deshalb ist es zielführend, das Notsignal (nur dann) auszusenden, wenn der Nutzer sich für das Gerät interessiert. So kann das akustische und/oder optische Signal abgesendet werden, wenn über ein externes Gerät 300 (z.B. HMI 200) der Status des Roboters abgefragt wird, und für den Roboter der zuvor beschriebene Status "Not-Stopp" gesetzt ist. Der Status des Roboters ist beispielsweise über eine App eines Smartphones oder Tablet-PCs abrufbar. Insbesondere kann der Abruf der Statusinformation des Roboters automatisch bei Programmstart erfolgen. Alternativ kann die App auch einen Menüpunkt enthalten, über dessen Aufruf die Statusinformation des Roboters abgerufen werden kann. Des Weiteren kann der Roboter dazu ausgebildet sein, über den Server 502 eine Push-Nachricht an die HMI 200 zu senden.

Beispielsweise kann das Notsignal für eine vorgebbare Zeit ausgesendet werden, wenn der Roboter das Problem erkennt und den Status auf "Not-Stopp" setzt, so dass ein in der Nähe befindlicher Nutzer dem Roboter helfen kann. Wenn nach beispielsweise 5 Minuten keine Hilfe kommt, würde der Roboter in einen Stromsparmodus (z. B. Abschalten aller Sensoren und Aktoren mit Ausnahme der Kommunikationseinheit 140) geschaltet, bis der Status des Roboters 100 über ein externes Gerät 300 abgefragt wird.

Ein Smartphone oder Tablet-PC kann vom Nutzer leicht mitgeführt werden, wodurch eine weltweite Kontrolle und Steuerung des Roboters (z. B. über das Internet) ermöglicht wird. Wenn der Nutzer jedoch bei der Abfrage des Status des Roboters 100 nicht zu Hause ist, so ist das Aussenden eines Notsignals durch den Roboter überflüssig. Deshalb kann beispielsweise bei einer Entscheidung, ob ein Notsignal ausgesandt wird, der Standort des Geräts, welches den Status abfragt, und somit der Standort des Nutzers berücksichtigt werden. So wird beispielsweise nur dann ein Notsignal ausgesandt, wenn der Standort des Geräts, welches den Status abfragt, innerhalb oder in der Nähe des Robotereinsatzgebiets liegt. Der Roboter 100 kann den Standort des externen Geräts (z.B. der HMI 200) basierend auf unterschiedlichen Daten ermitteln. Der Roboter kann z.B. eine Anfrage an das externe Gerät senden und das externe Gerät sendet eine Antwort-Nachricht, die erkennen lässt, ob sich das externe Gerät innerhalb des Robotereinsatzgebietes befindet. Das externe Gerät kann dazu ausgebildet sein, mittels eines GPS-Sensors seinen Standort zu ermitteln. Jedoch kann auch die SSID (Service Set Identifier) des WLANs, in das das externe Gerät eingeloggt ist, einen Rückschluss auf den (ungefähren) Standort des externen Geräts erlauben. Statt eine Anfrage zu senden kann der Roboter auch dazu ausgebildet sein, von sich aus zu detektieren, ob sich das externe Gerät in der Nähe befindet. Beispielsweise kann der Roboter 100 ermitteln, ob er selbst und das externe Gerät im selben WLAN eingeloggt sind. Falls ja, kann der Roboter davon ausgehen, dass sich das externe Gerät (und somit auch der Nutzer) in der Nähe befindet und das Notsignal absenden. In den hier beschriebenen Beispielen ist ein Notsignal ein (z.B. optisches oder akustisches) Signal, dass direkt vom Roboter selbst erzeugt wird und vom Nutzer direkt (ohne Hilfe technischer Geräte) wahrnehmbar ist.

Beispielsweise kann das mitführbare externe Gerät seine Position bestimmen können und dem Roboter mitteilen. Dies geschieht beispielsweise über ein satellitengestütztes globales Positionsbestimmungssystem wie GPS, auf Basis von Informationen eines Mobilfunknetzes, oder über WLAN-Informationen. Insbesondere die Erreichbarkeit der HMI 200 direkt über ein lokales WLAN, mit welchem auch der Roboter verbunden ist, ist ein sehr guter Hinweis, dass der Nutzer zu Hause ist.

Der Roboter kann ebenfalls feststellen, ob der Nutzer zu Hause ist, in dem er bestimmt, ob die Statusanfrage von einem Gerät aus einem lokalen Netzwerk wie dem heimischen WLAN stammt oder über das Internet vermittelt ist. Eine Kommunikationsverbindung über das Internet wird in der Regel über einen Cloud-Service (vgl. Fig. 1, Server 502) vermittelt, und ist hierdurch gut von einer lokalen Verbindung zu unterscheiden. Beispielsweise kann bei einer Statusabfrage über ein lokales Netzwerk der Roboter ein Notsignal aussenden, während bei einer Abfrage über das Internet dies unterbleibt.

Zudem können weitere Sensoren verwendet werden, um die Anwesenheit eines Nutzers zu detektieren. So kann ein im Roboter verbautes Mikrofon die Umgebungsgeräusche aufnehmen, woraus geschlossen werden kann, ob ein Nutzer anwesend ist oder den Haushalt betritt oder verlässt. Zahlreiche weitere externe Sensoren und Geräte können Informationen über die Ab- und Anwesenheit des Nutzers besitzen und diese mit dem Roboter teilen. Beispielsweise kann ein elektronisches Türschloss und/oder eine hiermit verbundene Alarmanlage eine Information an den Roboter senden, wenn der Nutzer es aktiviert oder deaktiviert.

## Patentansprüche

1. Verfahren zur Steuerung eines autonomen mobilen Roboters (100), der dazu ausgebildet ist, unter Verwendung von Sensoren und einer Karte eigenständig in einem Robotereinsatzgebiet zu navigieren; das Verfahren weist auf:
Detektieren von Hindernissen und Ermitteln der Position von detektierten Hindernissen basierend auf von den Sensoren erhaltenen Messdaten;
Steuern des Roboters (100), so dass eine Kollision mit einem detektierten Hindernis vermieden wird,
wobei die Karte Kartendaten umfasst, die mindestens einen virtuellen Sperrbereich (S) repräsentieren, welcher bei dem Steuern des Roboters (100) in gleicher Weise berücksichtigt wird, wie ein real detektiertes Hindernis,
wobei das Verfahren weiter aufweist:
Speichern der ermittelten Position von detektierten Hindernissen in der Karte;
Bestimmen der Position des Roboters (100) durch den Roboter (100); und **gekennzeichnet ist durch**
Anwenden eines Pfadplanungsalgorithmus, der unter Umgehung eines in der Karte gespeicherten Hindernisses einen Pfad zu einem Zielpunkt plant, wobei der virtuelle Sperrbereich (S) wie ein in der Karte gespeichertes Hindernis behandelt wird.

2. Verfahren gemäß Anspruch 1,
wobei der Roboter (100) seine eigene Position bestimmt und basierend auf seiner eigenen Position und der Karte die Relativposition des virtuellen Sperrbereichs (S) relativ zum Roboter (100) berechnet und der virtuelle Sperrbereich (S) vom Roboter (100) in gleicher Weise verarbeitet wird wie ein real detektiertes Hindernis.

3. Verfahren gemäß einem der Ansprüche 1 bis 2,
wobei eine Position eines Sperrbereichs als Relativposition relativ zu einer in der Karte verzeichneten Landmarke gespeichert wird.

4. Verfahren gemäß einem der Ansprüche 1 bis 3,
wobei der virtuelle Sperrbereich (S) mit Hilfe einer Begrenzungslinie (B) definiert ist, die der Roboter (100) nicht überqueren soll, und/oder wobei der virtuelle Sperrbereich (S) durch eine Fläche definiert ist, die der Roboter (100) nicht befahren soll.

5. Autonomer mobiler Roboter (100), der dazu ausgebildet ist, unter Verwendung von Sensoren und einer Karte eigenständig in einem Robotereinsatzgebiet zu navigieren, **gekennzeichnet dadurch, dass** der Roboter (100) eine Steuereinheit (150) umfasst, die dazu ausgebildet ist, den Roboter (100) zu veranlassen, ein Verfahren nach einem der Ansprüche 1 bis 4 durchzuführen.

## Claims

1. A method for controlling an autonomous mobile robot (100) adapted to autonomously navigate a robot mission area using sensors and a map; the method comprising:
detecting obstacles and determining the position of detected obstacles based on measurement data obtained from the sensors;
controlling the robot (100) so that a collision with a detected obstacle is avoided,
wherein the map comprises map data representing at least one virtual blocking area (S) which is taken into account when controlling the robot (100) in the same way as a real detected obstacle,
the method further comprising:
storing the determined position of detected obstacles in the map;
determining the position of the robot (100) by the robot (100); and
is **characterized by**
applying a path planning algorithm that plans a path to a destination point bypassing an obstacle stored in the map, wherein the virtual blocking area (S) is treated as an obstacle stored in the map.

2. The method according to claim 1,
wherein the robot (100) determines its own position and, based on its own position and the map, calculates the relative position of the virtual blocking area (S) relative to the robot (100), and the virtual blocking area (S) is processed by the robot (100) in the same way as a real detected obstacle.

3. The method according to any one of claims 1 to 2,
wherein a position of a blocking area is stored as a relative position relative to a landmark recorded in the map.

4. The method according to any one of claims 1 to 3,
wherein the virtual blocking area (S) is defined with the aid of a boundary line (B) which the robot (100) is not to cross, and/or wherein the virtual blocking area (S) is defined by a surface which the robot (100) is not to travel over.

5. An autonomous mobile robot (100) adapted to autonomously navigate a robot mission area using sensors and a map,
**characterized in that** the robot (100) comprises a control unit (150) configured to cause the robot (100) to perform a method according to any one of claims 1 to 4.

## Revendications

1. Procédé de commande d'un robot mobile autonome (100), qui est réalisé pour naviguer de façon autonome dans une zone d'intervention de robot en utilisant des capteurs et une carte ; le procédé présente :
la détection d'obstacles et la détermination de la position d'obstacles détectés sur la base de données de mesure obtenues par les capteurs ;
la commande du robot (100) de sorte qu'une collision avec un obstacle détecté soit évitée,
dans lequel la carte comprend des données de carte, qui représentent au moins une zone de blocage virtuelle (S), laquelle est prise en compte lors de la commande du robot (100) de la même manière qu'un obstacle réellement détecté,
dans lequel le procédé présente en outre :
l'enregistrement de la position déterminée d'obstacles détectés sur la carte ;
la détermination de la position du robot (100) par le robot (100) ; et **caractérisé par**
l'application d'un algorithme de planification de chemin, qui planifie un chemin jusqu'à un lieu de destination en contournant un obstacle enregistré sur la carte, dans lequel la zone de blocage virtuelle (S) est traitée comme un obstacle enregistré sur la carte.

2. Procédé selon la revendication 1,
dans lequel le robot (100) détermine sa propre position et calcule sur la base de sa propre position et de la carte la position relative de la zone de blocage virtuelle (S) par rapport au robot (100) et la zone de blocage virtuelle (S) est traitée par le robot (100) de la même manière qu'un obstacle réellement détecté.

3. Procédé selon l'une quelconque des revendications 1 à 2,
dans lequel une position d'une zone de blocage est enregistrée en tant que position relative par rapport à un repère noté sur la carte.

4. Procédé selon l'une quelconque des revendications 1 à 3,
dans lequel la zone de blocage virtuelle (S) est définie à l'aide d'une ligne de délimitation (B), que le robot (100) ne doit pas franchir, et/ou dans lequel la zone de blocage virtuelle (S) est définie par une surface, que le robot (100) ne doit pas parcourir.

5. Robot mobile autonome (100), qui est réalisé pour naviguer de façon autonome dans une zone d'intervention de robot en utilisant des capteurs et une carte,
**caractérisé en ce que** le robot (100) comprend une unité de commande (150), qui est réalisée pour amener le robot (100) à effectuer un procédé selon l'une quelconque des revendications 1 à 4.
